# EUROPÄISCHE PATENTANMELDUNG

(11) **EP 4 056 008 A1**
(43) Veröffentlichungstag der Anmeldung: **14.09.2022**
(21) Anmeldenummer: 21209473.4
(22) Anmeldetag: 22.11.2021
(51) Int. Cl.: A01B 71/02, A01D 34/66, A01D 75/30

(54) **LANDWIRTSCHAFTLICHE MASCHINENANORDNUNG**

(30) Priorität: 08.03.2021 DE 102021105548
(71) Anmelder: CLAAS Tractor S.A.S., 78141 Vélizy-Villacoublay Cedex (FR)
(72) Erfinder: Wieckhorst, Jan Carsten, 29525 Uelzen Orsteil Hanstedt 2 (DE); Ehlert, Christian, 33719 Bielefeld (DE); Birkmann, Christian, 33775 Versmold (DE); Pieper, Jona, 59394 Nordkirchen (DE); Ober, Martin, 78736 Trichtingen (DE); Pflanze, Sascha, 88348 Bad Saulgau (DE); Noyer, Pierre, 49074 Osnabrück (DE); Göldner, Martin, 72477 Schwenningen (DE); Fugunt, Michael, 88410 Bad Wurzach (DE)
(74) Vertreter: CLAAS Gruppe

(57) **Zusammenfassung**

Die vorliegende Erfindung betrifft eine landwirtschaftliche Maschinenanordnung (1), bestehend aus zumindest einer landwirtschaftlichen Arbeitsmaschine (2) und zumindest einem an die Arbeitsmaschine (2) adaptierten Anbaugerät, welches eine Schnittstelle zur Adaption an die Arbeitsmaschine (2) aufweist, wobei die Maschinenanordnung (1) ein den Betrieb optimierendes Fahrerassistenzsystem (21) umfasst, welches über eine Recheneinheit (22) und zumindest eine Bedien- und Anzeigeeinheit (20, 23) verfügt, und wobei die Arbeitsmaschine (2) und/oder das zumindest eine Anbaugerät wenigstens eine Steuervorrichtung (19, 28) zur Steuerung und Regelung der Arbeitsmaschine (2) und/oder des Anbaugerätes umfassen, wobei das zumindest eine Anbaugerät als ein Scheibenmähwerk (3, 4) ausgeführt ist und das Fahrerassistenzsystem (21) so strukturiert ist, dass es einen Arbeitsmaschineneinstellautomaten (30) und einen Scheibenmähwerkeinstellautomaten (31) bildet, wobei die jeweiligen Einstellautomaten (30, 31) in Abhängigkeit voneinander eine Optimierung der Arbeitsweise der Arbeitsmaschine (2) und des zumindest einen Scheibenmähwerkes (3, 4) bewirken.

## Beschreibung

Die vorliegende Erfindung betrifft eine landwirtschaftliche Maschinenanordnung gemäß dem Oberbegriff des Anspruches 1.

Eine landwirtschaftliche Maschinenanordnung, besteht aus zumindest einer landwirtschaftlichen Arbeitsmaschine, welche zur Einstellung von Einstellparametern der Arbeitsmaschine ansteuerbare Arbeitsaggregate aufweist, und zumindest einem an die Arbeitsmaschine adaptierten Anbaugerät, welches eine Schnittstelle zur Adaption an die Arbeitsmaschine aufweist. Arbeitsaggregate der Arbeitsmaschine sind beispielsweise ein dem Antrieb dienender Antriebsmotor, ein Getriebe sowie ein oder mehrere Nebenabtriebe zum Antreiben des adaptierten Anbaugerätes. Die Maschinenanordnung umfasst ein den Betrieb optimierendes Fahrerassistenzsystem, welches über eine Recheneinheit und zumindest eine Bedien- und Anzeigeeinheit verfügt, wobei die Recheneinheit von maschineninternen Sensorsystemen generierte Informationen, externe Informationen und in der Recheneinheit hinterlegbare Informationen verarbeitet. Weiterhin umfassen die Arbeitsmaschine und/oder das zumindest eine Anbaugerät wenigstens eine Steuervorrichtung zur Steuerung und Regelung der Arbeitsmaschine und/oder des Anbaugerätes. Der Begriff Einstellparameter ist weit zu verstehen und umfasst Betriebsparameter, wie beispielsweise eine Antriebsdrehzahl, einen hydraulischen oder pneumatischen Druck oder dergleichen, sowie Maschinenparameter im Sinne von Abstand, Anzahl und dergleichen mehr.

Das Einstellen von Arbeitsmaschine und Anbaugerät einer landwirtschaftlichen Maschinenanordnung ist ein komplexer Vorgang, welcher von einer Bedienperson Detailkenntnisse sowohl von der Arbeitsmaschine als auch dem jeweiligen zu adaptierenden Anbaugerät erfordert. Zudem muss die Bedienperson über landwirtschaftliche Kenntnisse verfügen, um Auswirkungen von Einstellungen abschätzen zu können. Die Einstellparameter von Arbeitsmaschine und Anbaugerät können einander wechselseitig beeinflussen. Bei Fehleinstellungen können das Arbeitsergebnis bzw. die Arbeitsqualität, die erzielbare Flächenleistung oder die Effizienz, bspw. der Kraftstoffverbrauch, negativ beeinflusst werden. Für einen wirtschaftlichen Betrieb einer solchen landwirtschaftlichen Maschinenanordnung ist es für den Eigentümer bzw. Betreiber, beispielsweise einen Landwirt oder einen Lohnunternehmer, relevant, dass die Maschinenanordnung so effizient wie möglich betrieben wird. Die Vielzahl an unterschiedlichen Arbeitsmaschinen, insbesondere Traktoren, und Anbaugeräten innerhalb einer jeweiligen Gattung erschwert es der jeweiligen Bedienperson, die Einstellparameter beider der Maschinenanordnung zugehörigen Vorrichtungen in der Weise einzustellen und an die jeweilige durch Umgebungs- und Ernte- bzw. Arbeitsbedingungen geprägte Betriebssituation anzupassen, dass ein optimaler Betrieb der Maschinenanordnung ermöglicht wird.

Die EP 2 769 613 B1 beschreibt eine aus einem Trägerfahrzeug und einem Frontmähwerk und zwei Heckmähwerken bestehende Mähwerkanordnung, deren Betrieb durch eine Steuerungseinrichtung geregelt wird. Die Steuerungseinrichtung ist dazu eingerichtet, in Abhängigkeit von einer sensorisch bestimmten Hangneigung, in welcher die Mähwerkanordnung betrieben wird, Betriebsparameter für den Betrieb der Mähwerke automatisch zu ermitteln.

Es ist somit Aufgabe der Erfindung, eine Maschinenanordnung der eingangs genannten Art weiterzubilden, welche sich durch eine vereinfachte und verbesserte Einstellbarkeit von Einstellparametern auszeichnet, welche die komplexen Zusammenhänge zur Erreichung eines optimierten Betriebes der Maschinenanordnung bei einer bestehenden oder sich ändernden Betriebssituation besser berücksichtigt.

Diese Aufgabe wird erfindungsgemäß durch eine landwirtschaftliche Maschinenanordnung gemäß den Merkmalen des Oberbegriffs des Anspruches 1 in Verbindung mit den kennzeichnenden Merkmalen des Anspruches 1 gelöst.

Gemäß dem Anspruch 1 ist eine landwirtschaftliche Maschinenanordnung vorgesehen, bestehend aus zumindest einer landwirtschaftlichen Arbeitsmaschine, welche zur Einstellung von Einstellparametern der Arbeitsmaschine ansteuerbare Arbeitsaggregate aufweist, und zumindest einem an die Arbeitsmaschine adaptierten Anbaugerät, welches eine Schnittstelle zur Adaption an die Arbeitsmaschine aufweist, wobei die Maschinenanordnung ein den Betrieb optimierendes Fahrerassistenzsystem umfasst, welches über eine Recheneinheit und zumindest eine Bedien- und Anzeigeeinheit verfügt, wobei die Recheneinheit von maschineninternen Sensorsystemen generierte Informationen, externe Informationen und in der Recheneinheit hinterlegbare Informationen verarbeitet und wobei die Arbeitsmaschine und/oder das zumindest eine Anbaugerät wenigstens eine Steuervorrichtung zur Steuerung und Regelung der Arbeitsmaschine und/oder des Anbaugerätes umfassen, wobei das zumindest eine Anbaugerät als ein Scheibenmähwerk ausgeführt ist und das Fahrerassistenzsystem so strukturiert ist, dass es einen Arbeitsmaschineneinstellautomaten und einen Scheibenmähwerkeinstellautomaten bildet, wobei die jeweiligen Einstellautomaten in Abhängigkeit voneinander eine Optimierung der Arbeitsweise der Arbeitsmaschine und des zumindest einen Scheibenmähwerkes bewirken. Durch das erfindungsgemäß strukturierte Fahrerassistenzsystem wird eine aufeinander abgestimmte Optimierung von Einstellparametern der Arbeitsmaschine und des daran adaptierten Scheibenmähwerkes bewirkt, wodurch der Betrieb der landwirtschaftlichen Maschinenanordnung effizienter wird. So lässt sich durch das Fahrerassistenzsystem eine optimierte Anpassung der Einstellparameter an eine gegebene Betriebssituation bewirken, um den Betrieb der Maschinenanordnung effektiv und optimiert zu gestalten. Insbesondere lässt sich der komplexe Vorgang der Einstellung der Maschinenanordnung vereinfachen, wodurch Fehleinstellungen durch eine Bedienperson vermeiden werden.

Bei der landwirtschaftlichen Arbeitsmaschine handelt es sich insbesondere um einen Traktor. Arbeitsaggregate der Arbeitsmaschine sind unter anderem ein Antriebsmotor, der insbesondere als Verbrennungsmotor ausgeführt sein kann, ein Getriebe, insbesondere ein unter Volllast oder Teillast schaltbares oder stufenlos schaltbares Getriebe, ein Nebenabtrieb wie eine Zapfwelle, ein Hubwerk, ein Hydrauliksystem oder sonstige Aktoren oder Arbeitsmaschine, die Einfluss auf den Betrieb der Maschinenanordnung haben können.

Bevorzugt bilden der Arbeitsmaschineneinstellautomat und der Scheibenmähwerkeinstellautomat einen gemeinsamen Einstellautomaten. Somit lassen sich der Arbeitsmaschineneinstellautomat und der Scheibenmähwerkeinstellautomat zentral durch das Fahrerassistenzsystem bedienen und ansteuern, um den Betrieb einer eine komplexe Struktur aufweisenden Maschinenanordnung, wie sie beispielsweise durch die Anordnung mehrerer anzutreibenden und anzusteuernder Scheibenmähwerke im Front- Heck- und/oder Seitenbereiche entsteht, zu optimieren.

Insbesondere kann das Fahrerassistenzsystem ein gemeinsames Regelwerk oder jeweils ein dem Arbeitsmaschineneinstellautomaten und dem Scheibenmähwerkeinstellautomaten zugeordnetes Regelwerk umfassen, welches bzw. welche eine Optimierung der Arbeitsweise der Maschinenanordnung bewirken.

Gemäß einer bevorzugten Weiterbildung können die Arbeitsmaschine und/oder das zumindest eine an dieser adaptierte Scheibenmähwerk wenigstens eine als ISO-basierte Steuervorrichtung ausgeführte Steuervorrichtung umfassen, die einen Teil des Arbeitsmaschineneinstellautomaten und/oder des Scheibenmähwerkeinstellautomaten ausbildet. Durch die Standardisierung der Kommunikation zwischen der Arbeitsmaschine und dem zumindest einen Scheibenmähwerk, insbesondere von unterschiedlichen Herstellern, mittels des sogenannten ISO-Busses, wird deren Betrieb, d.h. Einstellung und Ansteuerung vereinfacht.

Alternativ oder zusätzlich kann die Steuervorrichtung des zumindest einen Scheibenmähwerkes als separates Terminal oder als Hydraulikventilanordnung der Arbeitsmaschine ausgeführt sein, das einen Teil des Arbeitsmaschineneinstellautomaten und/oder des Scheibenmähwerkeinstellautomaten ausbildet.

In einer weiteren vorteilhaften Ausgestaltung kann das Fahrerassistenzsystem dazu eingerichtet sein, das zumindest eine Scheibenmähwerk mittels einer dem Scheibenmähwerk zugeordneten, als Jobrechner ausgeführten Steuereinrichtung anzusteuern.

Insbesondere kann das Fahrerassistenzsystem zur Optimierung der Arbeitsweise der Maschinenanordnung auswählbare Strategien umfassen. Hierdurch kann bereits vor Beginn der eigentlichen Optimierung vorgegeben werden, mit welcher übergeordneten Zielstellung eine Bedienperson die Maschinenanordnung betreiben will. Hierbei können die auswählbaren Strategien arbeitsmaschinenspezifische, scheibenmähwerkspezifische Strategien und/oder eine Kombination aus beiden sein. Die Optimierung der Arbeitsweise der Maschinenanordnung basiert dabei auf technischem und agronomischen Wissen, welches miteinander kombiniert wird. Das technische und agronomische Wissen kann dabei als Regelwerk hinterlegt sein.

Bevorzugt können die auswählbaren Strategien zumindest eine der Strategien "Effizienz", "Leistung", "Qualität", "Bodenschonung", "Kosten" und/oder "Benutzerdefiniert" umfassen. Der Strategie "Effizienz" liegt als Optimierungsziel die Reduzierung des Kraftstoffverbrauchs, und/oder die Reduzierung der Betriebsstunden der Maschinenanordnung für die Abarbeitung eines Arbeitsauftrages, die Verschleißminimierung und/oder die Minimierung der benötigen Zeit für die Durchführung von Vorgewendemanövern zugrunde. Die Strategie "Effizienz" kann auch die Dauer der Trocknung des gemähten Erntegutes einschließen, welche durch den Einsatz von Walzenaufbereitern als Zusatzausstattung des Scheibenmähwerkes beeinflussbar ist. Die Strategie "Leistung" orientiert sich insbesondere an der maximal erreichbaren Flächenleistung und/oder der Steigerung der Betriebsstunden der Maschinenanordnung. Bei der Strategie "Qualität" steht die aufgrund optimierter Einstellparameter erreichbare Arbeitsqualität durch das zumindest eine Scheibenmähwerk im Vordergrund. Hierzu zählen beispielsweise eine Minimierung des Rohascheanteils sowie das Einhalten einer Mindestmähhöhe, um den Nachwuchs von Futterpflanzen sicherzustellen, insbesondere um das Ausbreiten von Beikraut zu minimieren, welche die nachwachsenden Futterpflanzen zurückdrängen würden. Ein weiterer Aspekt, welcher bei der Strategie "Qualität" berücksichtigt werden kann, ist die Qualität der Aufbereitung von blattreichen Futterarten, die gleichmäßige Breitverteilung des gemähten Erntegutes über die Arbeitsbreite des Scheibenmähwerks und/oder die Schwadablage. Mit der Optimierungsstrategie "Bodenschonung" lässt sich das Ziel der Minimierung von durch die Maschinenanordnung hervorgerufenem Bodendruck und/oder Bodenverdichtung erreichen und/oder das Traktionsverhalten optimieren. Mit der Strategie "Kosten" können beispielsweise die Kosten pro Fläche (€ / ha) unter Berücksichtigung insbesondere der Kraftstoff-, Lohn und/oder Maschinenkosten optimiert werden. Die Strategie "Benutzerdefiniert" ermöglicht es der Bedienperson, die verfügbaren Strategien zumindest teilweise miteinander mit variablen Anteilen zu verknüpfen.

Vorteilhaft ist es, wenn das Fahrerassistenzsystem zu einer dialogbasierten Bestimmung von Einstellparametern eingerichtet ist, die zur Optimierung der Arbeitsweise der Maschinenanordnung heranzuziehen sind, wobei die Bestimmung zumindest eines Teils der Einstellparameter vor Inbetriebnahme der Maschinenanordnung und/oder Aufnahme eines landwirtschaftlichen Arbeitsvorganges durch die Maschinenanordnung, insbesondere eines Mähvorganges, durch das Fahrerassistenzsystem erfolgt. Hierdurch kann berücksichtigt werden, dass einige vorzunehmende Einstellungen unabhängig von vorherrschenden Bedingungen auf dem zu bearbeitenden Feld vorgenommen werden können. Die dialogbasierte Bestimmung von Einstellparametern kann natürlichsprachig erfolgen, d.h. durch einen vom Fahrerassistenzsystem vorgegebenen und geführten Dialog. Der Dialog ist vorzugsweise hierarchisch aufgebaut und kann dem Top-down-Ansatz folgen.

Bevorzugt kann das Fahrerassistenzsystem ein Modul "Einstellungen" mit mehreren Einzelmodulen "Maschinendaten", "Basiseinstellungen" sowie "Arbeitsziel" umfassen, welche einer dialogbasierten Eingabe und/oder Vorgabe, insbesondere durch Auswahl, von Einstellparametern der Arbeitsmaschine und des zumindest einen Scheibenmähwerkes der Maschinenanordnung dienen. Mittels des Moduls "Einstellungen" bzw. den davon umfassten Einzelmodulen "Maschinendaten", "Basiseinstellungen" sowie "Arbeitsziel" können vor der Inbetriebnahme der Maschinenanordnung und/oder Aufnahme eines landwirtschaftlichen Arbeitsvorganges Grundeinstellungen der Maschinenanordnung vorgenommen werden, deren Ausführung für den später durchzuführenden Arbeitsvorgang respektive Mähvorgang essentiell sind. Die Einzelmodule "Maschinendaten", "Basiseinstellungen" sowie "Arbeitsziel" können unabhängig voneinander ausführbar sein. Vorteilhaft ist es, wenn durch das Modul "Einstellungen" eine Übersicht von einzelmodulspezifischen Einstellschritten der Maschinenanordnung aus der Gruppe "Gerätedetails", "Arbeitsbedingungen", "Reifeneinstellung", "Ballastierungsempfehlung", "Reifendruckempfehlung", "Ernteguttyp", "Vorbereitung auf dem Hof", "Vorbereitung auf dem Feld", "Arbeitsstrategieeinstellungen", "Gerätedetails", "Aufgabe", "Typ", "Ankuppelpunkt und Ankuppelart", "Gewichtsbestimmung", "Ausrüstung des Anbaugerätes" vorgegeben wird. Durch diese Strukturierung kann eine bessere Übersichtlichkeit der innerhalb des Moduls "Einstellungen" respektive der Einzelmodule "Maschinendaten", "Basiseinstellungen" und "Arbeitsziel" abzuarbeitenden Verfahrensschritte erreicht werden. Eine insbesondere weniger versierte Bedienperson wird somit nicht durch die Fülle an Einstellparametern, die wegen der jeweiligen Komplexität von Arbeitsmaschine und Anbaugerät stark variieren kann, überfordert.

Dabei kann zumindest ein vor der Inbetriebnahme der Maschinenanordnung und/oder der Aufnahme eines landwirtschaftlichen Arbeitsvorganges, insbesondere Mähvorganges, durch die Maschinenanordnung zu bestimmender Einstellparameter für das zumindest eine Scheibenmähwerk aus der Gruppe Typ des zumindest einen Scheibenmähwerkes, Position und Mittel zur Anordnung des zumindest einen Scheibenmähwerkes an der Arbeitsmaschine, Zusatzausstattung an dem zumindest einen Scheibenmähwerk sein. Weiterhin zählen die Anzahl an Scheibenmähwerken, welche an der Arbeitsmaschine angeordnet werden, zu den Einstellparametern, die vor der Aufnahme des landwirtschaftlichen Arbeitsvorganges, hier und vorzugsweise des Mähvorganges, durch die Maschinenanordnung zu bestimmen sind. Unter Typ des zumindest einen Scheibenmähwerkes ist zum einen die Angabe des Herstellers sowie die Art des Scheibenmähwerks, d.h. die Ausführung als Frontscheibenmähwerk, als mitten- oder seitenaufgehängtes Scheibenmähwerk, Heckscheibenmähwerk oder als gezogenes Scheibenmähwerk, zu verstehen. Weiterhin bestimmt der Typ des Scheibenmähwerkes dessen Arbeitsbreite. Entsprechend des Typs des zumindest einen Scheibenmähwerks ist die Position des an die Arbeitsmaschine adaptierten Scheibenmähwerks ein vor der Aufnahme eines landwirtschaftlichen Arbeitsvorganges, insbesondere Mähvorganges, zu bestimmender Einstellparameter. Dies gilt entsprechend für die erforderliche Übereinstimmung der Anbaukategorie der Arbeitsmaschine und des jeweiligen Scheibenmähwerkes respektive der Mittel zur Anordnung bzw. Anbindung an der Arbeitsmaschine, wie Doppelfangschalen für ein Heckscheibenwerk oder eine Schnellkupplung für das Frontscheibenmähwerk. Scheibenmähwerke können des Weiteren eine Zusatzausstattung in Form eines Zinkenaufbereiters oder eines Walzenaufbereiters aufweisen, was einen weiteren Einstellparameter darstellt, dessen dialogbasierte Eingabe für die Bestimmung von optimierten Einstellparametern durch den oder die Einstellautomaten erforderlich ist. Die Verwendung einer Zusatzausstattung erfordert wiederum weitere Einstellungen für deren optimalen Betrieb, beispielsweise das Einstellen des Walzenabstands und/oder eine auf eine Walze ausgeübte Federkraft des Walzenaufbereiters. Mit einer als Zinkenaufbereiter oder Walzenaufbereiter ausgeführten Zusatzausstattung können zusätzlich einstellbare Leitbleche, schwenkbare Schwadscheiben und/oder angetriebene Fördertrommeln an dem zumindest einen Scheibenmähwerk angeordnet sein, welche der gleichmäßigen Verteilung des Mähgutes über die Arbeitsbreite bzw. der Gutflussverbesserung des Mähgutes dienen. Bei Scheibenmähwerken ohne Zusatzausstattung in Form eines Zinkenaufbereiters oder eines Walzenaufbereiters können schwenkbare Schwadscheiben am Scheibenmähwerk angeordnet sein, welche der gleichmäßigen Verteilung des Mähgutes über die Arbeitsbreite dienen. Eine Zusatzausstattung kann auch eine Querfördervorrichtung an einem Scheibenmähwerk sein, welche der Schwadbildung dient.

Weiterhin kann zumindest ein vor der Aufnahme eines landwirtschaftlichen Arbeitsvorganges, insbesondere Mähvorganges, durch die Maschinenanordnung zu bestimmender Einstellparameter der Arbeitsmaschine aus der Gruppe Ballastierung, Reifendruck, Reifengeometrie, Achslast, Entlastungskraft einer Entlastungsvorrichtung, Hubwerkeinstellparameter sein. Hierfür werden Einstellparameter der Arbeitsmaschine herangezogen, die für die jeweilige Arbeitsmaschine herstellerspezifisch sind und in der Recheneinheit hinterlegt sind und/oder im Rahmen der dialogbasierten Eingabe durch Abfragen bestimmt werden, um etwaige Abweichungen von den herstellerspezifischen Einstellparametern berücksichtigen zu können, die insbesondere auf Optimierungsvorschlägen der der Einstellautomaten des Fahrerassistenzsystems beruhen.

Insbesondere kann zumindest ein vor der Inbetriebnahme der Maschinenanordnung und/oder der Aufnahme eines landwirtschaftlichen Arbeitsvorganges, insbesondere Mähvorganges, durch die Maschinenanordnung zu bestimmender Einstellparameter aus der Gruppe Antriebsdrehzahl zumindest einer Abtriebswelle der Arbeitsmaschine, Hubwerkeinstellparameter, Art einer Anbauvorrichtung für die mittelbare oder unmittelbare Adaption respektive Anhängung eines jeweiligen Scheibenmähwerks an die Arbeitsmaschine, Parameter der Anbauvorrichtung, Schnitthöhe, Entlastungskraft einer Entlastungsvorrichtung, Art und Ansteuerung einer Bodenkonturanpassungsvorrichtung, Bodenabstand der Bodenkonturanpassungsvorrichtung, Kopplungsabstand zur Arbeitsmaschine sein.

Bevorzugt können in der Recheneinheit geräteherstellerspezifische Einstellparameter für wenigstens eine Kombination aus zumindest einem Scheibenmähwerk und einer Arbeitsmaschine hinterlegt sein. Vorteilhaft ist es, wenn für unterschiedliche Arbeitsmaschinen und unterschiedliche Scheibenmähwerke zumindest eines Herstellers gerätespezifische Betriebsparameter und/oder Maschinenparameter in der Recheneinheit wiederabrufbar hinterlegbar sind. Auf diese Weise kann eine, insbesondere nicht editierbare, Basiskonfiguration bereitgestellt werden, die für die Optimierung der Arbeitsweise der jeweiligen Maschinenanordnung durch die Einstellautomaten, insbesondere als Vorlage, herangezogen werden kann. Vorzugsweise können die geräteherstellerspezifischen Betriebs- und/oder Einstellparameter für die wenigstens eine Kombination als ein personifizierter Datensatz abspeicherbar und somit editierbar sein.

Insbesondere kann das Fahrerassistenzsystem dazu eingerichtet sein, in Abhängigkeit vom Typ und der Position der Anordnung eines frontseitig und zumindest eines heckseitig angeordneten Scheibenmähwerkes an der Arbeitsmaschine und einer jeweiligen Arbeitsbreite der Scheibenmähwerke einzustellende Überlappungsbereiche der Arbeitsbreiten zu bestimmen. Aus dem Einstellparameter Überlappungsbereich resultieren weitere Einstellparameter, welche die Länge verwendeter Gelenkwellen oder die Längeneinstellung längenveränderlicher Gelenkwellen betreffen, mit denen das jeweilige Scheibenmähwerk angetrieben wird, dessen Anordnung über die Arbeitsbreite eines frontseitig oder mittig angeordneten Scheibenmähwerks hinausgeht. Die jeweilige Arbeitsbreite wird durch die Breite des Mähbalkens des jeweiligen Scheibenmähwerkes bestimmt. Daraus können des Weiteren mögliche Ablagestrategien für den Schwad resultieren.

Weiter bevorzugt kann das Fahrerassistenzsystem dazu eingerichtet sein, von dem Fahrerassistenzsystem im Kontext mit einer spezifischen Maschinenanordnung dialogbasierend erfasste, sensorisch bestimmte und/oder durch Übermittlung aus externen Datenquellen empfangene Einstellparameter als gemeinsamen Datensatz oder separate Datensätze zu speichern, und dass der Datensatz oder die Datensätze, die der jeweiligen spezifischen Maschinenanordnung zugeordnet sind, wiederholt abrufbar und editierbar sein können. Ein solcher Datensatz lässt sich beispielsweise individuell einer spezifischen Maschinenanordnung aus Arbeitsmaschine und Scheibenmähwerk oder Scheibenmähwerken zuordnen, um auf diese bei einem neuerlichen Einsatz als editierbare Basis für eine Einstellung zugreifen zu können.

Des Weiteren kann zumindest ein der Maschinenanordnung zugeordnetes Sensorsystem dazu eingerichtet sein, einen oder mehrere Einstellparameter der Maschinenanordnung, Erntegutparameter und/oder Umweltparametern autonomen zu bestimmen.

Insbesondere kann das Fahrerassistenzsystem zum Empfang von externen Informationen eingerichtet sein, um daraus Einstellparameter, Erntegutparameter und/oder Umweltparameter zu bestimmen. Hierzu kann das Fahrerassistenzsystem mit externen Datenquellen kommunizieren, beispielsweise mit einem Farmmanagementsystem, welches zentral auf einer Hofstelle oder dezentral in einem Rechenzentrum betrieben wird, sowie mit Drittanbietern von Daten, wie Wetterdaten, Produktdaten von Herstellern der Arbeitsmaschine und/oder des zumindest einen Scheibenmähwerkes, Positionsdaten und dergleichen mehr.

Gemäß einer bevorzugten Weiterbildung kann in der Recheneinheit ein funktionales Modell der Arbeitsmaschine und des zumindest einen Scheibenmähwerkes hinterlegt sein, welches zumindest einen Teil der funktionalen Zusammenhänge der Arbeitsmaschine und des daran adaptierten zumindest einen Scheibenmähwerkes abbildet. So können mittels des funktionalen Modells die verschiedenen Betriebssituationen der Arbeitsmaschine und des zumindest einen Scheibenmähwerkes modelliert werden, um in der jeweiligen Betriebssituation und unter Berücksichtigung der ausgewählten Regelstrategie eine Optimierung der Arbeitsweise der Arbeitsmaschine und des zumindest einen Scheibenmähwerkes zu bewirken. Denkbar sind alternativ auch reine Black-Box-Modelle, die beispielsweise auf Künstlicher Intelligenz (KI) oder neuronalen Netzwerken basieren, oder Mischformen, um zumindest einen Teil der funktionalen Zusammenhänge abzubilden.

Zur Abbildung der funktionalen Zusammenhänge der Maschinenanordnung kann zumindest einem Einstellparameter der Arbeitsmaschine und/oder des zumindest einen Scheibenmähwerkes mindestens ein n-dimensionales Kennfeld zugeordnet sein, wobei der jeweilige Einstellparameter als Ausgangsgröße des mindestens einen n-dimensionalen Kennfeldes definiert ist. Mittels des mindestens einen n-dimensionalen Kennfeldes lassen sich auch komplexe funktionale Zusammenhänge eines Systems aus der Maschinenanordnung und der Umgebung mit geringem rechnerischen Aufwand abbilden. Kennlinien des n-dimensionalen Kennfeldes können adaptiv an die jeweilige Situation angepasst werden, um Zusammenhänge beim Betrieb von Arbeitsmaschine, zumindest einem Scheibenmähwerk und Umgebungsbedingungen gesamtheitlich zu berücksichtigten, welche Einfluss auf die Regelstrategien haben. Die Anpassung der Kennlinien des n-dimensionalen Kennfeldes erfolgt dabei durch die jeweiligen Einstellautomaten, den Arbeitsmaschineneinstellautomaten und den Scheibenmähwerkeinstellautomaten, besonders bevorzugt durch den von diesen gebildeten gemeinsamen Einstellautomaten.

Vorzugsweise kann die Recheneinheit das mindestens eine n-dimensionale Kennfeld im laufenden Betrieb, insbesondere zyklisch, mit den Einsatzbedingungen der Maschinenanordnung abgleichen, vorzugsweise, dass in der Recheneinheit mindestens ein n-dimensionales Initialkennfeld für den zumindest einen Einstellparameter hinterlegt ist, und dass bei einer ersten Ermittlung des zumindest einen Einstellparameters die Recheneinheit die Ermittlung basierend auf dem Initialkennfeld vornimmt. Hierzu kann beispielsweise auf den oder die Datensätze zurückgegriffen werden, die zu einem früheren Einsatzzeitpunkt der aktiven Maschinenanordnung in der Recheneinheit hinterlegt wurden.

Bevorzugt kann das Fahrerassistenzsystem dazu eingerichtet sein, mittels der zumindest einen Bedien- und Anzeigeeinheit einen Bedienablauf zur Einstellung eines zur Optimierung der Arbeitsweise der Maschinenanordnung anzupassenden Einstellparameters zu visualisieren. Dazu können der Bedienperson neben dem jeweiligen durch das Fahrerassistenzsystem bestimmten oder vorgeschlagenen Wert für einen Einstellparameter zusätzlich die Komponente oder die Komponenten angezeigt werden, an denen die entsprechende Einstellung umzusetzen ist. Ein Teil der Einstellparameter lässt sich dabei automatisch oder ferngesteuert umsetzen, während ein Teil der umzusetzenden Einstellparameter einen manuellen Eingriff erfordert. Ersteres ist beispielsweise bei der Einstellung von Hydraulikdrücken der Fall; letzteres beispielsweise bei der Längenanpassung von Gelenkwellen. Die Darstellung der Komponente oder der Komponenten, die durch manuellen Eingriff einzustellen ist, kann dabei in Form von einzelnen Piktogrammen bzw. Icons oder als eine sequentielle Bildfolge erfolgen.

Besonders vorteilhaft ist es, wenn die zumindest eine Bedien- und Anzeigeeinheit des Fahrerassistenzsystems Teil eines mobilen Datenverarbeitungsgerätes ist. Die Ausführung zumindest einer Bedien- und Anzeigeeinheit des Fahrerassistenzsystems als Bestandteil eines mobilen Datenverarbeitungsgerätes hat den Vorteil, dass die Bedienperson dieses mit sich führen kann, wenn der oder die zuvor bestimmten Einstellparameter an der Maschinenanordnung, insbesondere manuell, eingestellt werden. Das mobile Datenverarbeitungsgerät kann drahtlos oder drahtgebunden mit dem Fahrerassistenzsystem kommunizieren. Alternativ kann es vorgesehen sein, dass die zumindest eine Bedien- und Anzeigeeinheit auf einer entfernten, insbesondere von der Arbeitsmaschine und/oder dem zumindest einen Scheibenmähwerk entfernten Steuerungshardware läuft. Sofern vorliegend die Rede von einer entfernten Steuerungshardware ist, handelt es sich vorzugsweise ganz allgemein um eine maschinenanordnungsferne Datenverarbeitungshardware, bei der es sich beispielsweise um ein Cloud-basiertes Datenverarbeitungssystem handeln kann. Grundsätzlich kann es sich bei der maschinenanordnungsfernen Datenquelle aber auch um einen von der Maschinenanordnung entfernten Datenserver handeln, der über eine Internetverbindung oder dergleichen mit der Maschinenanordnung kommuniziert.

Die vorliegende Erfindung wird nachstehend anhand eines in den Zeichnungen dargestellten Ausführungsbeispieles näher erläutert.

Es zeigen:
- Fig. 1: eine Draufsicht auf eine Maschinenanordnung aus einer Arbeitsmaschine und zumindest einem an die Arbeitsmaschine adaptierten Anbaugerät;
- Fig. 2: eine schematische Darstellung der Maschinenanordnung mit einem Fahrerassistenzsystem;
- Fig. 3: eine schematische Ansicht der Struktur eines Einstellautomaten der Maschinenanordnung;
- Fig. 4: eine schematische Darstellung des Fahrerassistenzsystems;
- Fig. 5: ein Flussdiagramm zur Veranschaulichung der Arbeitsweise des Fahrerassistenzsystems; und
- Fig. 6 bis Fig. 30: schematisch und exemplarisch Darstellungen des Menüführungs- und Bedienkonzeptes des Fahrerassistenzsystems.

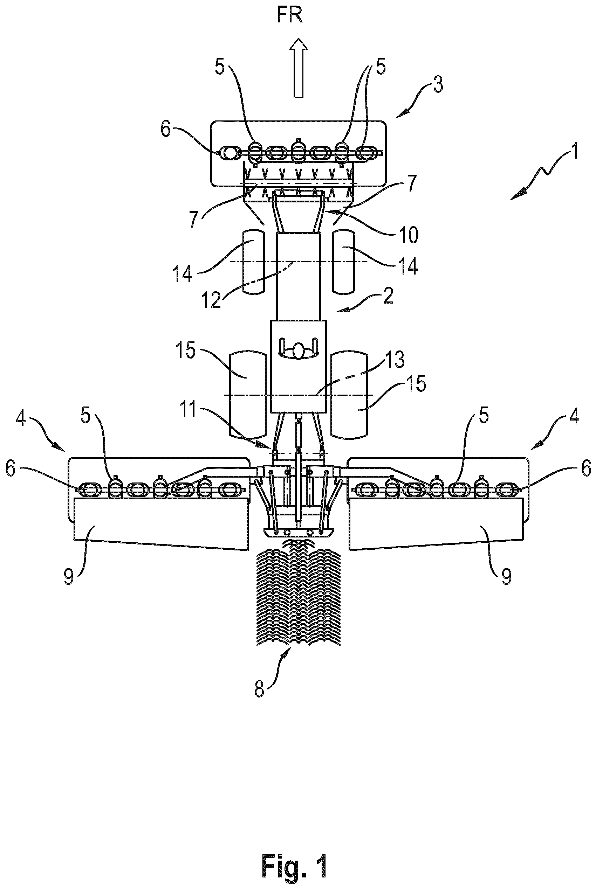

In Fig. 1 ist eine Draufsicht auf eine Maschinenanordnung 1 aus einer Arbeitsmaschine 2 und zumindest einem an die Arbeitsmaschine 2 adaptierten Anbaugerät dargestellt. Die Arbeitsmaschine 2 ist als ein Traktor ausgeführt. Das Anbaugerät ist im dargestellten Ausführungsbeispiel als ein frontseitig angeordnetes Scheibenmähwerk 3, welches nachfolgend auch als Frontscheibenmähwerk bezeichnet wird, ausgeführt sowie als im Heckbereich der Arbeitsmaschine 2 angeordnete Scheibenmähwerke 4, die nachfolgend auch als Heckscheibenmähwerke bezeichnet werden. Die Anordnung eines oder mehrerer Heckscheibenmähwerke 4 kann hinsichtlich ihrer Positionierung im Heckbereich variieren, je nachdem ob es sich um ein mittenaufgehängtes oder seitenaufgehängtes Heckscheibenmähwerk 4 handelt. Eine Anordnung zweier Heckscheibenmähwerke 4 wird auch als Schmetterlingskombination bezeichnet. Darüber hinaus kann ein im Heckbereich angeordnetes Scheibenmähwerk 4 als gezogenes Mähwerk mit Mittendeichsel oder Seitendeichsel ausgeführt sein. Jedes der in

Fig. 1 dargestellten Scheibenmähwerke 3,4 weist Schneidorgane 5 zum Trennen von Erntegut auf, wobei die Schneidorgane 5 quer zur Fahrrichtung FR gesehen, unter Ausbildung jeweils eines Mähbalkens 6 nebeneinander positioniert sind.

Das Scheibenmähwerk 3 weist eine optionale Zusatzausstattung 7 auf, die als Zinkenaufbereiter oder Walzenaufbereiter ausgeführt sein kann. Die heckseitig angeordneten Scheibenmähwerke 4 können gleichfalls mit einer solchen Zusatzausstattung 7 ausgeführt sein. Die

Heckscheibenmähwerke 4 können zudem mit Querfördervorrichtungen 9 zur Schwadablage als Zusatzausstattung 7 ausgestattet sein, die dem Transport des geschnittenen Erntegutes quer zur Fahrrichtung FR dienen. Die Querfördervorrichtungen 9 können als Bandeinheiten oder Schneckenförderer ausgeführt sein. Mittels der Querförderrichtungen 9 lassen sich verschiedene Formen der Ablage eines Schwads 8 erreichen. Zur Adaption der Scheibenmähwerke 3, 4 an der Arbeitsmaschine 2 weist dieses ein frontseitiges Hubwerk 10 sowie ein heckseitiges Hubwerk 11 auf. Die Hubwerke 10, 11 sind als Dreipunkthubwerke ausgeführt und werden hydraulisch betätigt, und weisen einstellbare Oberlenker 11a und Unterlenker 11b auf.

Die Arbeitsmaschine 2 weist eine Vorderachse 12 und eine Hinterachse 13 mit daran angeordneten Vorderrädern 14 und Hinterrädern 15 auf. Die Vorderräder 14 und die Hinterräder 15 variieren in der Regel hinsichtlich der Abmessungen ihrer Bereifung.

Die Arbeitsmaschine 2 weist verschiedene Arbeitsaggregate 34 auf, wie beispielsweise einen Antriebsmotor 16, ein Getriebe 17, Nebenabtriebswellen 18, die Hubwerke 10, 11 oder eine Reifendruckregelanlage. Die Arbeitsaggregate 34 der Arbeitsmaschine 2 werden durch eine als Jobrechner ausgeführte Steuereinrichtung 19 gesteuert und geregelt vorgesehen ist. Die Steuereinrichtung 19 ist dazu eingerichtet, Einstellparameter dieser Arbeitsaggregate 34 zu bestimmen und einzustellen. In einer Kabine der Arbeitsmaschine 2 kann eine Bedien-und Anzeigeeinheit 20 angeordnet sein, die mit der Steuereinrichtung 19 in Verbindung steht.

Der Maschinenanordnung 1 ist ein Fahrerassistenzsystem 21 zugeordnet, welches der Einstellung und Optimierung des Betriebs der Maschinenanordnung 1 aus Arbeitsmaschine 2 und dem zumindest einen Scheibenmähwerk 3, 4 dient. Das Fahrerassistenzsystem 21 verfügt über eine Recheneinheit 22 und zumindest eine Bedien- und Anzeigeeinheit 23. Die Recheneinheit 22 verarbeitet von maschineninternen Sensorsystemen 35 generierte interne Informationen 24, externe Informationen 25 und in der Recheneinheit hinterlegbare Informationen 26. Die Bedien- und Anzeigeeinheit 23 kann von der Bedien- und Anzeigeeinheit 20 in der Kabine der Arbeitsmaschine 2 gebildet sein oder als eine zusätzliche Bedien- und Anzeigeeinheit ausgeführt sein, insbesondere als Teil einer mobilen Datenverarbeitungsvorrichtung 27 wie einem Mobilfunktelefon oder einem Tablet.

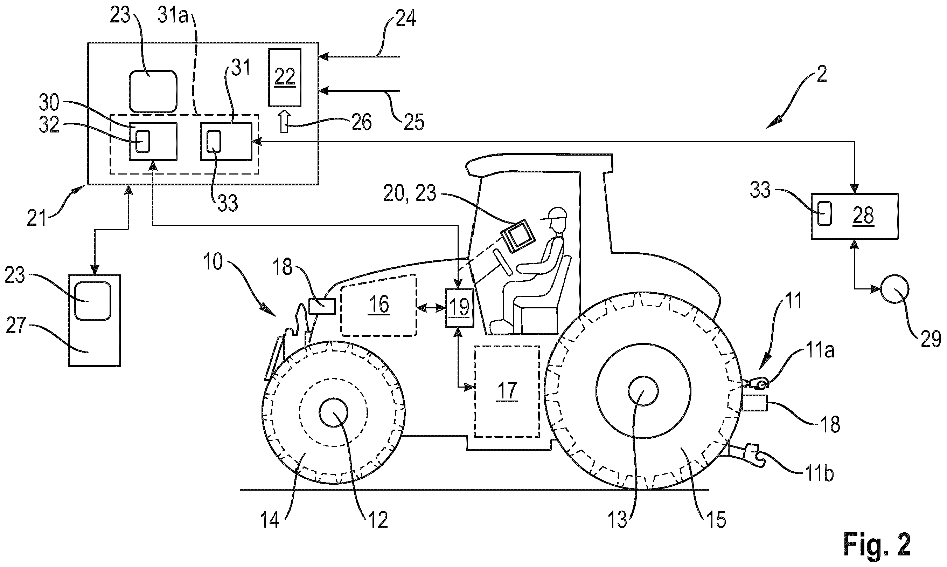

Dem oder den in Fig. 2 nicht dargestellten Scheibenmähwerken 3, 4 der Maschinenanordnung 1 kann zumindest eine Steuereinrichtung 28 zugeordnet sein, die der Steuerung und Regelung von einem oder mehreren Arbeitsaggregaten 29 des Scheibenmähwerkes 3, 4 dient. Die Steuereinrichtung 28 kann gleichfalls als Jobrechner ausgeführt sein. Alternativ kann die Steuervorrichtung 28 des zumindest einen Scheibenmähwerkes 3, 4 als separates Terminal oder als Hydraulikventilanordnung der Arbeitsmaschine 2 ausgeführt sein, die einen Teil des Arbeitsmaschineneinstellautomaten 30 und/oder des Scheibenmähwerkeinstellautomaten 31 ausbildet.

Ein Arbeitsaggregat 29 des Frontscheibenmähwerkes 3 ist beispielsweise die als Zinkenaufbereiter oder Walzenaufbereiter ausgeführte Zusatzausstattung 7. Die Querfördervorrichtung 9 des Heckscheibenmähwerkes 4 oder der Heckscheibenmähwerke 4 bilden ein weiteres Arbeitsaggregat 29, welches oder welche durch die Steuereinrichtung 28 gesteuert und geregelt wird bzw. werden. Einstellparameter der Zusatzausstattung 7 als Arbeitsaggregate 29 des Scheibenmähwerkes 3,4 sind der Abstand von rotierenden Zinken zu Reibplatten oder Zinkenkämmen der Zinkenaufbereiter sowie der Walzenabstand und/oder die Vorspannung, mit der die Walzenaufbereiter beaufschlagt werden. Weitere Einstellparameter der Zusatzausstattung 7 sind Drehzahlen der rotierenden Zinken bzw. Walzen.

Die Steuereinrichtungen 19 und 28 der Arbeitsmaschine 2 und der Scheibenmähwerke 3, 4 können -wie dargestellt - separat ausgeführt sein oder als eine gemeinsame Steuereinrichtung, die an der Arbeitsmaschine 2 oder einem der Scheibenmähwerke 3, 4 angeordnet ist.

Das Fahrerassistenzsystem 21 ist so strukturiert, dass es einen Arbeitsmaschineneinstellautomaten 30 und einen Scheibenmähwerkeinstellautomaten 31 bildet, wobei die jeweiligen Einstellautomaten 30, 31 in Abhängigkeit voneinander eine Optimierung der Arbeitsweise der Arbeitsmaschine 2 und des zumindest einen Scheibenmähwerkes 3, 4 bewirken. Das Fahrerassistenzsystem 21 umfasst dem Arbeitsmaschineneinstellautomaten 30 sowie dem Scheibenmähwerkeinstellautomat 31 zugeordnete Regelwerke 32, 33 zur Optimierung der Arbeitsweise der Arbeitsmaschine 2 sowie des zumindest einen Scheibenmähwerkes 3, 4. Bevorzugt bilden der Arbeitsmaschineneinstellautomat 30 und der Scheibenmähwerkeinstellautomat 31 einen gemeinsamen Einstellautomaten 31a.

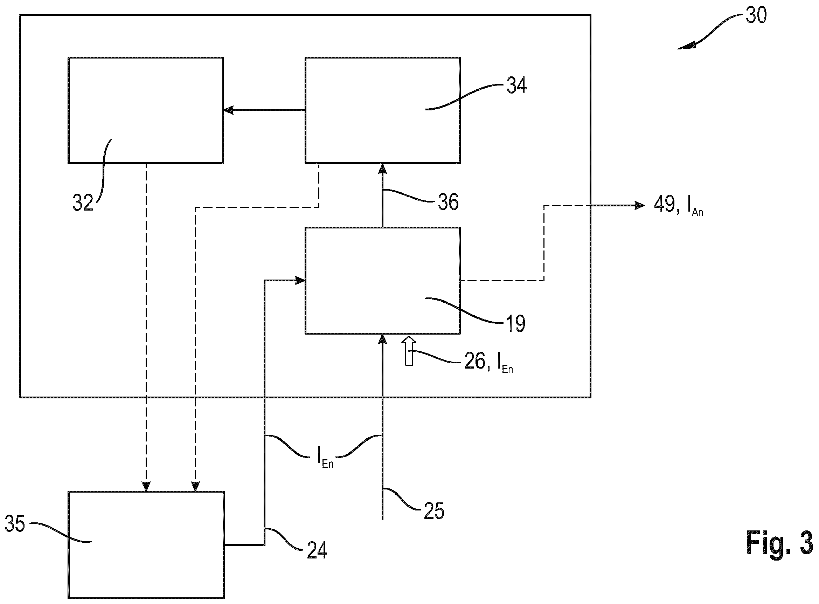

In Fig. 3 ist eine schematische Ansicht der Struktur eines der Einstellautomaten 30, 31 dargestellt. Der exemplarisch dargestellte Arbeitsmaschineneinstellautomat 30 umfasst die Arbeitsaggregate 34 der Arbeitsmaschine 2, maschineninterne Sensorsysteme 35 sowie die Steuereinrichtung 19. Von der Steuereinrichtung 19 werden Steuersignale 36 an die Arbeitsaggregate 34, wie die Hubwerke 10, 11, den Antriebsmotor 16, das Getriebe 17, die Nebenabtriebswellen 18, mittels eines Bussystems übermittelt, welche der Einstellung zumindest eines der Arbeitsaggregate 34 dienen. Zumindest ein Sensorsystem 35 überwacht das zumindest eine Arbeitsaggregate 34 und gegebenenfalls einen oder mehrere dem Arbeitsaggregate 34 zugeordnete Aktoren 32. Die von dem zumindest einen Sensorsystem 35 generierten Sensordaten 24 werden mittels des Bussystems an die Steuereinrichtung 19 zur Auswertung übertragen. Darüber hinaus werden der Steuereinrichtung 19 externe Informationen 25 sowie die in der Recheneinheit 22 hinterlegbaren Informationen 26 bereitgestellt.

Die von dem zumindest einen Sensorsystem 35 bereitgestellten Sensordaten 24, die in der Recheneinheit 22 hinterlegbaren Informationen 26 sowie die externen Informationen 25 bilden Eingangssignale I_{En} des Einstellautomaten 30. Mit I_{An} sind Ausgangssignale respektive Einstellparameter 49 des Einstellautomaten 30 bezeichnet. Der Einstellautomat 30 optimiert die Arbeitsweise der Arbeitsmaschine 2 autonom, d.h. der Einstellautomat 30 ist dazu eingerichtet, die erforderlichen Einstellungen von Einstellparametern 49 der Arbeitsaggregate 34 kontinuierlich autonom zu bestimmen und vorzugeben. Durch den Einstellautomaten 30 werden an die jeweils vorliegenden Betriebs- und Mähbedingungen optimal angepasste Einstellparameter 49 bereitgestellt. Der Scheibenmähwerkautomat 31 ist strukturell identisch aufgebaut und arbeitet in gleicher Weise. Dabei bewirken die jeweiligen bzw. in dem gemeinsamen Einstellautomaten 31a zusammengefassten Einstellautomaten 30, 31 in Abhängigkeit voneinander eine Optimierung der Arbeitsweise der Arbeitsmaschine 2 und des zumindest einen Scheibenmähwerkes 3, 4.

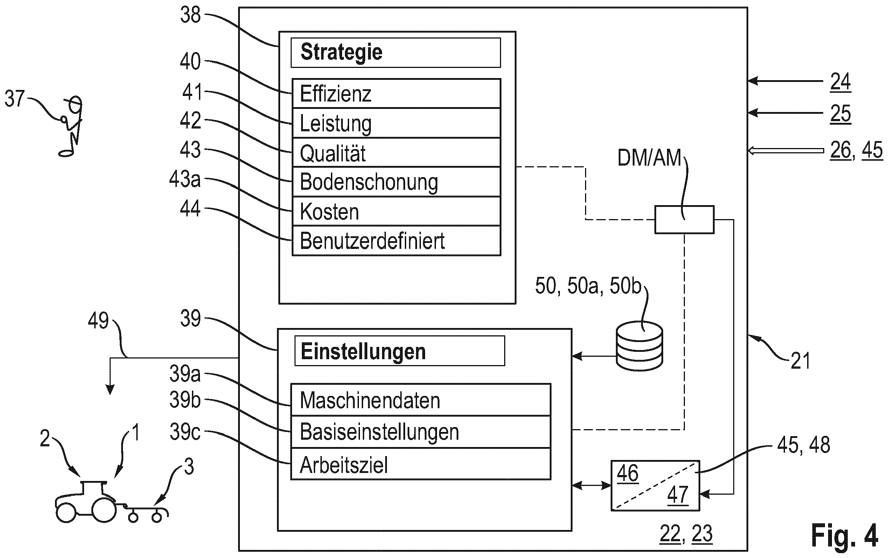

Das Fahrerassistenzsystem 21 umfasst zur Optimierung der Arbeitsweise der Maschinenanordnung 1 auswählbare Strategien 40, 41, 42, 43, 43a, 44 wie in der Darstellung gemäß Fig. 4 veranschaulicht wird. Hierdurch kann bereits vor Beginn der eigentlichen Optimierung vorgegeben werden, mit welcher übergeordneten Zielstellung eine Bedienperson 37 die Maschinenanordnung 1 betreiben will. Hierbei können die auswählbaren Strategien 40, 41, 42, 43, 43a, 44 arbeitsmaschinenspezifische, scheibenmähwerkspezifische Strategien und/oder eine Kombination aus beiden sein.

Fig. 4 zeigt eine schematische Darstellung des Fahrerassistenzsystems 21 bei gleichzeitiger Veranschaulichung von Visualisierungs- Bedien- und Strukturaspekten desselben. Das Fahrerassistenzsystem 21 weist ein Modul "Strategie" 38 und ein Modul "Einstellungen" 39, welches mehrere auswählbare Einzelmodule "Maschinendaten" 39a, "Basiseinstellungen" 39b und "Arbeitsziel" 39c umfasst, auf.

In der Recheneinheit 22 sind Betriebsparameter 45 der Maschinenanordnung 1 als Informationen 26 hinterlegt, die auf einem oder mehreren herstellerspezifischen Basisdatensätzen 46 der Arbeitsmaschine 2 und des zumindest einen Scheibenmähwerkes 3, 4 basieren. Die jeweiligen Basisdatensätze 46 umfassen all diejenigen Daten, die von einer Bedienperson 37 nicht zwingend spezifisch editiert werden müssen und für die von der Bedienperson 37 im Modul "Strategie" 38 gewählte Aufgabe allgemeingültig und damit vordefiniert hinterlegt sind.

Daneben gibt es bedienerspezifische Basisdatensätze 47, die einer spezifischen Maschinenanordnung 1 oder einer spezifischen Arbeitsmaschine 2 und/oder zumindest einem spezifischen Scheibenmähwerk 3, 4 durch die Bedienperson 37 zugewiesen sind. Vorteilhaft ist es, wenn für unterschiedliche Arbeitsmaschinen 1 und/oder unterschiedliche Scheibenmähwerke 3, 4 zumindest eines Herstellers gerätespezifische Betriebsparameter 45 und/oder gerätespezifische Maschinenparameter 48 in der Recheneinheit 22 als Einstellparameter 49 wiederabrufbar hinterlegbar sind. Auf diese Weise kann eine, vorzugsweise nicht editierbare, Basiskonfiguration bereitgestellt werden, die für die Optimierung der Arbeitsweise der jeweiligen Maschinenanordnung 1 durch die Einstellautomaten 30, 31 oder den gemeinsamen Einstellautomaten 31a herangezogen werden kann.

Anhand der gerätespezifischen Betriebsparameter 45 und/oder gerätespezifischen Maschinenparameter 48 erfolgt die Optimierung der Arbeitsweise der spezifischen Maschinenanordnung 1, nebst den von maschineninternen Sensorsystemen 35 generierten Informationen 24 sowie externen Informationen 25, nur auf der Grundlage der für die spezifische Arbeitsmaschine 2 und das zumindest eine spezifische Scheibenmähwerk 3, 4 in Betracht kommenden Betriebsparameter 45 und Maschinenparameter 48. Somit werden nur die für die Ausstattungsvariante der Maschinenanordnung 1 relevanten Einstellparameter 49 zur Optimierung der Arbeitsweise von dem Fahrerassistenzsystem 21 vorgeschlagen.

Bevorzugt können die auswählbaren Strategien zumindest eine der Strategien "Effizienz" 40, "Leistung" 41, "Qualität" 42, "Bodenschonung" 43, "Kosten" 43a und/oder "Benutzerdefiniert" 44 umfassen.

Der Strategie "Effizienz" 40 liegt als Optimierungsziel die Reduzierung des Kraftstoffverbrauchs pro Flächeneinheit (I/ha), und/oder die Reduzierung der Betriebsstunden der Maschinenanordnung 1 für die Abarbeitung eines Arbeitsauftrages, die Verschleißminimierung und/oder die Minimierung der benötigen Zeit für die Durchführung von Vorgewendemanövern zugrunde. Die Strategie "Effizienz" 40 kann auch die Dauer der Trocknung des gemähten Erntegutes einschließen, welche durch den Einsatz von Walzenaufbereitern oder Zinkenaufbereiten als Zusatzausstattung 7 des jeweiligen Scheibenmähwerkes 3, 4 beeinflussbar ist.

Die Strategie "Leistung" 41 orientiert sich insbesondere an der maximal erreichbaren Flächenleistung (ha/h) und/oder der Steigerung der Betriebsstunden der Maschinenanordnung 1.

Bei der Strategie "Qualität" 42 steht eine aufgrund optimierter Einstellparameter erreichbare Arbeitsqualität durch das zumindest eine Scheibenmähwerk 3, 4 im Vordergrund. Hierzu zählen beispielsweise eine Minimierung des Rohascheanteils sowie das Einhalten einer Mindestmähhöhe, um den Nachwuchs von Futterpflanzen sicherzustellen, insbesondere um das Ausbreiten von Beikraut zu minimieren, welche die nachwachsenden Futterpflanzen zurückdrängen können. Damit einhergehend lässt sich der Einsatz von Herbiziden reduzieren. Ein weiterer Aspekt, welcher bei der Strategie "Qualität" 42 berücksichtigt werden kann, ist die Qualität der Aufbereitung von blattreichen Futterarten, die gleichmäßige Breitverteilung des gemähten Erntegutes über die Arbeitsbreite des Scheibenmähwerks 3, 4 und/oder die Art und Gleichmäßigkeit der Schwadablage.

Mit der Optimierungsstrategie "Bodenschonung" 43 lässt sich das Ziel der Minimierung von durch die Maschinenanordnung 1 hervorgerufenem Bodendruck und/oder Bodenverdichtung erreichen und/oder das Traktionsverhalten optimieren.

Mit der Strategie "Kosten" 43a können die Kosten pro Fläche (€ / ha) unter Berücksichtigung der Kraftstoff-, Lohn- und / oder Maschinenkostenoptimiert werden.

Die Strategie "Benutzerdefiniert" 44 ermöglicht es der Bedienperson 37, die verfügbaren Strategien 41, 42, 43 und 43a zumindest teilweise miteinander mit variablen Anteilen zu verknüpfen.

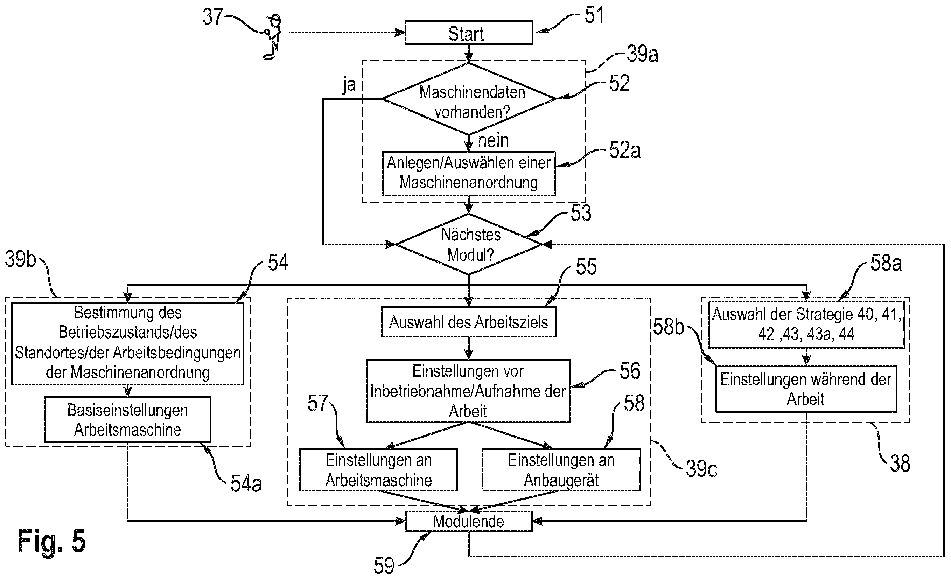

Das Modul "Einstellungen" 39 mit seinen Einzelmodule 39a, 39b, 39c hat unter anderem die natürlichsprachige, dialogbasierte Auswahl der Zusammenstellung der Maschinenanordnung 1 durch die Bedienperson 37 zum Gegenstand. In einer oder mehreren Datenbanken 50, 50a, 50b, die in der Recheneinheit 21 hinterlegt sein kann bzw. können, können Daten über verschiedene Arbeitsmaschinen 2 und Scheibenmähwerke 3, 4 sowie zugehörige gerätespezifische Betriebsparameter 45 und/oder gerätespezifische Maschinenparameter 48 abrufbar hinterlegt sein. Auf diese Datenbanken 50, 50a, 50b kann bei der Ausführung des Moduls "Einstellungen" 39 bzw. der jeweiligen Einzelmodule "Maschinendaten" 39a, "Basiseinstellungen" 39b, "Arbeitsziel" 39c als auch des Moduls "Strategie" 38 zurückgegriffen werden, um die Arbeitsmaschine 2 sowie das zumindest eine adaptierte Scheibenmähwerk 3, 4 zu identifizieren. Anhand der Identifikation werden die weiteren Auswahl- und/oder Einstellmöglichkeiten bei der Ausführung des Moduls "Einstellungen" 39 abgeleitet. Die natürlichsprachige, dialogbasierte Abarbeitung des Moduls "Einstellungen" 39 bzw. der auswählbaren Einzelmodule 39a, 39b, 39c wird nachfolgend anhand der Fig. 5 näher erläutert. Die Datenbanken 50, 50a, 50b können auch als externe Datenbanken ausgeführt sein, die Teil eines entfernten Farmmanagementsystems oder dergleichen sein können. Die Abarbeitung des Modul "Einstellung" 39 erfolgt dabei schrittweise.

Durch das Modul "Einstellungen" 39 wird der Bedienperson 37 eine Übersicht von Einstellschritten 95 der Maschinenanordnung 1 aus der Gruppe "Gerätedetails", "Arbeitsbedingungen", "Reifeneinstellung", "Ballastierungsempfehlung", "Reifendruckempfehlung", "Ernteguttyp", "Vorbereitung auf dem Hof", "Vorbereitung auf dem Feld", "Arbeitsstrategieeinstellungen", "Gerätedetails", "Aufgabe", "Typ", "Ankuppelpunkt und Ankuppelart", "Gewichtsbestimmung", "Ausrüstung des Anbaugerätes" vorgegeben.

Das Fahrerassistenzsystem 21 kann zudem so beschaffen sein, dass es entweder in einem Dialogmodus DM mit der Bedienperson 37 oder in einem Automatikmodus AM betrieben werden kann. In beiden Fällen findet die Kommunikation, der Dialog mit der Bedienperson 37, natürlichsprachig statt.

In Fig. 5 ist ein Flussdiagramm zur Veranschaulichung der Arbeitsweise des Fahrerassistenzsystems 21 dargestellt.

In einem ersten Verfahrensschritt 51 erfolgt die Aktivierung des Fahrerassistenzsystems 21 durch die Bedienperson 37 und eine Modulauswahl wird aktiviert und abgearbeitet. Dabei kann die Bedienperson 37 das Einzelmodul "Maschinendaten" 39a oder eines der anderen Module 39b, 39c oder 38 auswählen.

Im Verfahrensschritt 52 wird geprüft, ob Maschinendaten, wie gerätespezifische Betriebsparameter 45 und/oder gerätespezifische Maschinenparameter 48, vorhanden sind.

Im nachfolgenden Verfahrensschritt 52a wird in Abhängigkeit vom Ergebnis des Verfahrensschrittes 52 im Rahmen der Abarbeitung des Moduls "Maschinendaten" 39 das Anlegen und/oder Auswählen einer Maschinenanordnung 1 durchgeführt. Dies kann die Bedienperson 37 in einem natürlichsprachigen Dialog mit dem Fahrerassistenzsystem 21 bewirken, wobei die herstellerspezifische Auswahl von Arbeitsmaschine 2 und zumindest einem Scheibenmähwerk 3, 4 der Maschinenanordnung 1 durch die Bedienperson 37 erfolgt.

Im einfachsten Fall wird das Fahrerassistenzsystem 21 der Bedienperson 37 die Frage stellen, für welche der in Fig. 1 beispielhaft erläuterten Kombination einer Maschinenanordnung 1 die Anlage oder Auswahl veranlasst werden soll. Zu diesem Zweck kann die Bedienperson 37 auf die Datenbank 50 respektive die herstellerspezifischen und/oder bedienerspezifischen Basisdatensätze 46, 47 zugreifen. An dieser Stelle lässt sich auch eine neue Maschinenanordnung 1 als neuer bedienerspezifischer Datensatz 47 durch die Bedienperson 37 definieren und anlegen. Die Abspeicherung erfolgt vorzugsweise in der Datenbank 50.

Nach erfolgter Anlage oder Auswahl der Maschinenanordnung 1 kann im Verfahrensschritt 53 zu einem weiteren Modul 38, 39b oder 39c übergegangen werden.

Das Einzelmodul "Basiseinstellungen" 39b hat Einstellungen der Arbeitsmaschine 2 zum Gegenstand.

Im Verfahrensschritt 54 erfolgt eine Bestimmung des aktuellen Betriebszustands und/oder des Standortes und/oder der Arbeitsbedingungen der Maschinenanordnung 1. Im einfachsten Fall kann eine Bestimmung des Standortes durch einen Abfragedialog erfolgen, innerhalb dessen die Bedienperson 37 den Standort sowie den aktuellen Betriebszustand auswählt. Eine automatische Standortbestimmung kann dadurch bewirkt werden, dass der Maschinenanordnung 1, insbesondere der Arbeitsmaschine 2, ein GPS-Sender zugeordnet ist, mittels dessen die Position der Maschinenanordnung 1 bestimmbar ist. Eine automatische Bestimmung des aktuellen Betriebszustands der Maschinenanordnung 1 durch das Fahrerassistenzsystem 21 kann alternativ anhand eines durch ein Sensorsystem 35 erfassten Betriebsparameters eines Arbeitsaggregates 34 wie dem Antriebsmotor 16 oder der Nebenabtriebswellen 18 erfolgen. Betriebsparameter können dabei eine bestimmte Fahrgeschwindigkeit oder eine bestimmte Drehzahl des Nebenabtriebswellen 18 sein.

Im nachfolgenden Verfahrensschritt 54a werden die erforderlichen Basiseinstellungen der Arbeitsmaschine 2 durchgeführt. So werden vor der Aufnahme eines landwirtschaftlichen Arbeitsvorganges, insbesondere eines Mähvorganges, für die Arbeitsmaschine 2 zu bestimmende und einzustellende Einstellparameter 49 aus der Gruppe Ballastierung, Reifendruck, Reifengeometrie, Achslast, Entlastungskraft einer Entlastungsvorrichtung, Hubwerkparameter von den Einstellautomaten 30, 31 oder dem gemeinsamen Einstellautomaten 31a des Fahrerassistenzsystems 21 bestimmt und als einzustellende und/oder auszuwählende Einstellparameter 49 der Bedienperson 37 vorgegeben. Beispielsweise wird die Reifengeometrie ausgehend von den in der Reifendatenbank 50a hinterlegten herstellerspezifischen Basisdatensätze 46 der Arbeitsmaschine 1 bestimmt. Das Fahrerassistenzsystem 21 ermöglicht es der Bedienperson 37 darüber hinaus, diese Information des Basisdatensatzes 46 in einem natürlichsprachigen Dialog zu editieren und als bedienerspezifischen Datensatz 47 abzuspeichern. Die erforderliche Ballastierung der Arbeitsmaschine 2 ergibt sich aus der im Verfahrensschritt 52 bzw. 52a bestimmten Auswahl der vorliegenden Maschinenanordnung 1 in Abhängigkeit von Typ, Anzahl und Anordnung des zumindest einen Scheibenmähwerks 3, 4. Nach der Abarbeitung der Verfahrensschritte 54 und 54a des Einzelmoduls "Basiseinstellungen" wird auf den Verfahrensschritt 53 zwecks einer weiteren oder erneuten Modulauswahl zurückgesprungen.

Das Einzelmodul "Arbeitsziel" 39c hat spezifische Vorgaben zum Gegenstand, die weiteren Einfluss auf die Einstellungen der Arbeitsmaschine 2 und des zumindest einen Scheibenmähwerkes 3, 4 haben. Hierzu gehören die Einstellschritte 95 "Ernteguttyp", "Vorbereitung auf dem Hof", "Vorbereitung auf dem Feld", "Arbeitsstrategieeinstellungen" sowie "Gerätedetails", "Aufgabe", "Typ", "Ankuppelpunkt und Ankuppelart", "Gewichtsbestimmung", "Ausrüstung des Anbaugerätes".

Im gemäß dem Einzelmodul "Arbeitsziel" 39c auszuführenden Verfahrensschritt 55 wird als Arbeitsziel die Art der Kulturpflanze abgefragt, die mit der Maschinenanordnung 1 gemäht werden soll. Hierzu zählen Gras, welches auf einer Wiese oder einem Feld angebaut wird, Luzerne (AlfaAlfa), Klee, Ganzpflanzensilage, Zuckerrohr und sonstige Fruchtarten. Die Auswahl der Kulturpflanzen erfolgt vorzugsweise mittels eines Auswahlmenüs. Zudem kann im Verfahrensschritt 55 die vorherrschende Erntebedingung abgefragt werden. Dabei kann es sich bei der vorherrschenden Erntebedingung insbesondere um Informationen über die Wuchsdichte, die Wuchshöhe oder ob das Erntegut steht oder liegt handeln, welche einen großen Einfluss auf den Mähvorgang haben.

In Abhängigkeit vom Ergebnis des Verfahrensschrittes 55 werden in den nachfolgenden Verfahrensschritten 56 bis 58 Einstellparameter 49 durch die Einstellautomaten 30, 31 bzw. den gemeinsamen Einstellautomaten 31a vorgeschlagen und durch Einstellung und/oder Auswahl durch die Bedienperson 37 vorgenommen, welche für die Einsatzdauer bei der Durchführung des landwirtschaftlichen Arbeitsvorganges, d.h. des Mähvorganges, der Maschinenanordnung 1 unverändert bleiben. Die gemäß den Verfahrensschritten 56 bis 58 vorzunehmenden Einstellungen erfolgen in der Regel vor einer Inbetriebnahme bzw. Aufnahme der Arbeit auf der Hofstätte der Maschinenanordnung 1, da hierzu teilweise manuelle Eingriffe durch die Bedienperson 37 erforderlich sind, die auf die durch die Einstellautomaten 30, 31 vorgeschlagenen Einstellparameter 49 zurückgehen. Grundsätzlich können die gemäß den Verfahrensschritten 56 bis 58 vorzunehmenden Einstellungen auch unmittelbar vor der Inbetriebnahme auf einem abzuarbeitenden Feld durchführbar sein.

Für die weiteren Einstellungen gemäß den Verfahrensschritten 57 und 58 der angelegten oder ausgewählten Maschinenanordnung 1 können im Verfahrensschritt 58 spezifische Angaben zu dem zumindest einen Scheibenmähwerk 3, 4 abgefragt werden, sofern diese Informationen nicht bereits als herstellerspezifische und/oder bedienerspezifische Basisdatensätze 46, 47 nach einer bereits zu einem vorangehenden Zeitpunkt erfolgten Ausführung des Moduls "Maschinendaten" 39a als Einstellparameter 49 abrufbar hinterlegt worden sind. Zu den spezifischen Angaben zählen unter anderem der Hersteller des Scheibenmähwerkes 3,4, die Art des Scheibenmähwerkes, d.h. die Ausführung als Frontscheibenmähwerk 3 oder Heckscheibenmähwerk 4, die Breite des Mähbalkens 6 und die Anzahl der Schneidorgane 5 des jeweiligen Schneidwerkes 3, 4, sowie im Fall des Heckscheibenmähwerkes 4 die seitliche oder mittige Aufhängung an der Arbeitsmaschine 2. Weiterhin werden die Art und das Vorhandensein einer Zusatzausstattung 7, die Art der Ansteuerung des zumindest einen Scheibenmähwerkes 3, 4, der Typ des Hydrauliksystems für den Betrieb des zumindest einen Scheibenmähwerkes 3, 4, die Art und das Vorhandensein einer Querfördervorrichtung 9 zur Schwadablage in dem natürlichsprachigen Dialog mit dem Fahrerassistenzsystem 21 abgefragt. Ein weiterer Aspekt der Verfahrensschritte 57, 58 ist die Abfrage der Art der Steuerungsvorrichtung 28 zur Ansteuerung des jeweiligen Scheibenmähwerkes 3, 4. Des Weiteren wird die Art des an der Arbeitsmaschine 2 verfügbaren Hydrauliksystems abgefragt, wobei es sich um ein offenes Load-Sensing-System oder ein geschlossenes Load-Sensing-System handeln kann. Ein weiterer Aspekt des Verfahrensschrittes 58 ist die Abfrage ob eine Querfördervorrichtung 9 zur Schwadablage vorhanden ist und wie diese ausgebildet ist. Für die Auswahl durch die Bedienperson 37 können als Förderband oder Schneckenförderer ausgeführte Querfördervorrichtung 9 eines Scheibenmähwerkes 3, 4, hier des oder der Heckscheibenmähwerke, vorgeschlagen werden.

Die in den Verfahrensschritten 52 bis 54 bestimmten Angaben werden für die weitere Abarbeitung der Module 38 und 39c herangezogen.

Im Verfahrensschritt 58 werden die Einstellungen an dem zumindest einen Scheibenmähwerk 3, 4 vorgenommen. Diese umfassen vor der Inbetriebnahme der Maschinenanordnung 1 und/oder der Aufnahme eines landwirtschaftlichen Arbeitsvorganges durch die Maschinenanordnung 1 von dem Fahrerassistenzsystem 21 zu bestimmende Einstellparameter 49 für das zumindest eine Scheibenmähwerk 3,4 aus der Gruppe Typ des zumindest einen Scheibenmähwerkes 3, 4, Position und Mittel zur Anordnung des zumindest einen Scheibenmähwerkes 3,4 an der Arbeitsmaschine 2, Vorhandensein und Art der Zusatzausstattung 7 an dem zumindest einen Scheibenmähwerk 3,4. Anhand des Typs des jeweiligen Scheibenmähwerkes 3, 4 lässt sich mitunter auf die Position der Anordnung an der Arbeitsmaschine 2 schließen.

Zudem ist vor der Inbetriebnahme der Maschinenanordnung 1 und/oder der Aufnahme eines landwirtschaftlichen Arbeitsvorganges durch die Maschinenanordnung 1 im Verfahrensschritt 57 zumindest ein Einstellparameter 49, der aus der Gruppe Antriebsdrehzahl zumindest einer Nebenabtriebswelle 18 der Arbeitsmaschine 2, Hubwerkeinstellparameter, Art einer Anbauvorrichtung für die mittelbare oder unmittelbare Adaption des zumindest einen Scheibenmähwerkes 3,4 an die Arbeitsmaschine 2, Parameter der Anbauvorrichtung, Schnitthöhe, Entlastungskraft einer Entlastungsvorrichtung, Bodenabstand einer Bodenkonturanpassungsvorrichtung, Kopplungsabstand zur Arbeitsmaschine 2 ist, zu bestimmen und als von der Bedienperson 37 einzustellender und/oder auszuwählender Einstellparameter 49 vorzugeben.

So können bereits auf der Hofstätte Hubwerkeinstellparameter und/oder die Art der Anbauvorrichtung für die mittelbare oder unmittelbare Adaption des Scheibenmähwerkes 3, 4 an die Arbeitsmaschine 2 sowie Betriebsparameter der Anbauvorrichtung als Einstellparameter 49 durch das Fahrerassistenzsystem 21 bestimmt werden. Der Anbau des Scheibenmähwerkes 3,4 kann mittelbar durch einen Schnellkuppelrahmen erfolgen, welcher exemplarisch in der EP 3 351 074 A1 beschrieben ist, oder unmittelbar an Oberlenker 11a und Unterlenkern 11b beispielsweise des heckseitigen Hubwerkes 11 oder entsprechend an Oberlenker und Unterlenkern des frontseitigen Hubwerkes 10. Hubwerkeinstellparameter sind die vertikale und seitliche Verstellbarkeit der Lenker und deren Sperrung sowie die einstellbare Länge von Hubstreben des jeweiligen Hubwerkes 10, 11.

Das frontseitige Hubwerk 10 ist mit einer Entlastungsvorrichtung zur Minderung des Anteils der Gewichtskraft, welche über das Scheibenmähwerk 3 in der Arbeitsstellung am Boden abgestützt wird, ausgeführt, welche in Abhängigkeit von der Ausführung der Arbeitsmaschine 2 als Zugfeder oder als Hydraulikzylinder mit einer Kette oder als integrierte Entlastungsvorrichtung, wie sie exemplarisch in EP 2 316 256 A1 beschrieben ist, ausgeführt sein können. Zur Einstellung der Entlastungskraft wird die Federkraft durch die Länge der Kette eingestellt, welche von dem Einstellautomaten 31 des Fahrerassistenzsystems 21 vorgegeben wird. Im Fall des Hydraulikzylinders als Entlastungsvorrichtung oder der integrierten Entlastungsvorrichtung wird ein einzustellender Hydraulikdruck vorgegeben.

Das Vorhandensein von Walzenaufbereitern als Zusatzausstattung 7 erfordert eine Anpassung des Hydraulikdruckes, mit dem diese betrieben werden. In Abhängigkeit von der einzustellenden Schnitthöhe kann der Einsatz von Hochschnittkufen unterschiedlicher Höhe erforderlich sein.

Vor Beginn des Mähvorganges wird die jeweils einzustellende Antriebsdrehzahl an den Nebenabtriebswellen 18 durch das Fahrerassistenzsystem 21 vorgegeben. Die jeweilige einzustellende Antriebsdrehzahl ist abhängig vom Typ und der Arbeitsbreite des Scheibenmähwerkes 3,4.

Das Fahrerassistenzsystem 21 kann so beschaffen sein, dass die ermittelten Einstellparameter 49 entweder direkt eingestellt werden, d.h. durch mittelbare oder unmittelbare Ansteuerung von Aktoren oder dergleichen, soweit ein manueller Eingriff der Bedienperson 37 an der Arbeitsmaschine 2 und/oder dem Scheibenmähwerk 3, 4 nicht erforderlich ist. In diesem Fall wird die Bedienperson 37 gefragt, ob die ermittelten Einstellparameter 49 eingestellt werden sollen. Alternativ erfolgt eine Anzeige der Einstellparameter 49 und die Bedienperson 37 muss sodann deren Einstellung auslösen bzw. durch einen manuellen Eingriff bewirken. Einen manuellen Eingriff bilden beispielsweise das Anhängen eines Scheibenmähwerkes 3, 4, die Anordnung von längenveränderlichen Gelenkwellen und/oder die Einstellung der Länge von Gelenkwellen, das Justieren von Schwadblechen und dergleichen mehr.

Nach erfolgter Abarbeitung des Einzelmoduls "Arbeitsziel" 39c wird zum Verfahrensschritt 59 "Modulende" übergegangen und zum Verfahrensschritt 53 zurückgesprungen. Im Verfahrensschritt 53 hat die Bedienperson 37 die Möglichkeit, ein weiteres der Einzelmodule 39a, 39b, 39c oder das Modul 38, auch erneut, auszuführen.

Die zumindest einmalige Ausführung und Abarbeitung des Einzelmoduls "Maschinendaten" 39a des Moduls "Einstellung" 39 für eine spezifische Maschinenanordnung 1 ist eine wesentliche Voraussetzung dafür, dass für die Ausführung der Module "Auswahl Strategie" 38, "Basiseinstellungen" 39b und "Arbeitsziel" 39c notwendige Informationen dem Fahrerassistenzsystem 21, welches den Arbeitsmaschineneinstellautomaten 30 und den Scheibenmähwerkeinstellautomaten 31 bildet, zur Verfügung stehen. Da eine Auswahl des Moduls "Strategie" 38 sowie der Einzelmodule "Basiseinstellungen" 39b und "Arbeitsziel" 39c unabhängig von dem Einzelmodul "Maschinendaten" 39a durchführbar ist, sind innerhalb der Module 38, 39b, 39c Plausibilitätsanfragen vorgesehen, um zu überprüfen, ob durch eine Ausführung des Einzelmoduls "Maschinendaten" 39a eine Maschinenanordnung 1 ausgewählt wurde.

Dem Menüführungs - und Bedienkonzept des Fahrerassistenzsystems 21 liegt einheitlich zugrunde, Einstellempfehlungen, neben einem natürlichsprachigen Dialog, unter Zuhilfenahme von Icons, Piktogrammen, Illustrationen mit Lupen-Ansichten und/oder farblichen Hervorhebungen zu erläutern.

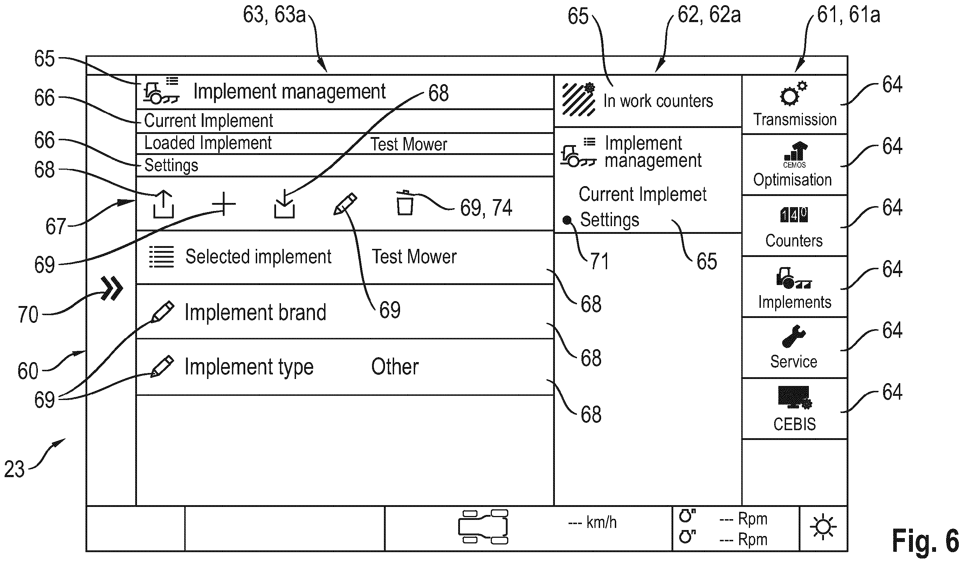

In den Fig. 6 bis 18 wird das Menüführungs - und Bedienkonzept des Fahrerassistenzsystems 21 beispielhaft an einzelnen Einstellparametern 49 der Maschinenanordnung 1 näher erläutert. Auf die vorangehenden Ausführungen zu den Fig. 1 bis 5 wird dabei Bezug genommen. Dem Menüführungs - und Bedienkonzept des Fahrerassistenzsystems 21 liegt einheitlich zugrunde, Einstellempfehlungen, neben einem natürlichsprachigen Dialog mit der Bedienperson 37, unter Zuhilfenahme von Icons, Piktogrammen, Illustrationen mit Lupen-Ansichten und/oder farblichen Hervorhebungen zu erläutern.

In Fig. 6 ist eine schematische Darstellung einer ersten Ansicht der zumindest einen Bedien- und Anzeigeeinheit 23 am Beispiel der Auswahl eines Scheibenmähwerks 3, 4 dargestellt. Die zumindest eine Bedien- und Anzeigeeinheit 23 ist dazu eingerichtet, in einer ersten Bedien- und Anzeigeebene 60 zumindest drei nebeneinander angeordnete Visualisierungsbereiche 61, 62, 63 dazustellen. Die Visualisierungsbereiche 61, 62, 63 sind hierarchisch absteigend nebeneinander positioniert. Mit hierarchisch absteigender Positionierung ist gemeint, dass sich ausgehend von einer Hauptmenüebene 61a im hierarchisch höchststehenden Visualisierungsbereich 61, welche oberbegriffliche Hauptmenüpunkte 64 auswählbar darstellt, zu einer darunterliegenden Menüebene 62a im Visualisierungsbereich 62, welche dem jeweiligen oberbegrifflichen Hauptmenüpunkt 64 zugehörige Menüpunkte 65 darstellt, der hierarchisch am niedrigsten stehende Visualisierungsbereich 63 mit einer Submenüebene 63a anschließt. Im Visualisierungsbereich 63 sind ein Menüband 67 mit spezifizierenden Auswahloptionen 68, Einstelloptionen 69 und/oder Bedienoptionen 70 darstellt, die dem vorangehend im Visualisierungsbereich 62 ausgewählten Menüpunkt 65 zugeordnet sind. Der Aufbau und Umfang des Menübandes 67 sowie der Umfang, in welchem die Auswahloptionen 68, Einstelloptionen 69 sowie Bedienoptionen 70 zur Verfügung stehen, können in Abhängigkeit vom ausgewählten Menüpunkt 65 variieren. Die Auswahl der in dem Menüband 67 jeweils enthaltenen Auswahloptionen 68, Einstelloptionen 69 sowie Bedienoptionen 70 erfolgt vorzugsweise durch Berühren der berührungssensitiven Oberfläche der Bedien- und Anzeigeeinheit 23.

Beispielhaft ist gemäß der Darstellung in Fig. 6 in der obersten Menüebene im Visualisierungsbereich 61 eine Auswahl des Hauptmenüpunktes 64 "Implements" ("Anbaugeräte") durch die Bedienperson 37 getroffen worden. Im daneben angeordneten Visualisierungsbereich 62 wird die dem Hauptmenüpunkt 64 zugehörige darunterliegende Menüebene 62a angezeigt, in welcher der Menüpunkt 65 "Implement management" ("Anbaugerätemanagement") durch die Bedienperson 37 aktiviert wurde. Neben dem jeweiligen auswählbaren Menüpunkt 65 kann bei getroffener Auswahl eines Menüpunktes 65 im Visualisierungsbereich 62 zusätzlich eine Übersicht der in der Submenüebene 63a des Visualisierungsbereiches 63 enthaltenen Submenüpunkte 66 dargestellt werden.

Eine jeweilige innerhalb der jeweiligen Visualisierungsbereiche 61, 62, 63 getroffene Auswahl wird optisch hervorgehoben. Hierzu kann die von der Bedienperson 37 getroffene Auswahl beispielsweise durch eine invertierte Darstellung, eine zusätzliche Umrandung und/oder eine abweichende Farbgebung der Auswahl und dergleichen mehr hervorgehoben werden.

Im Visualisierungsbereich 63 werden der ausgewählte Menüpunkt 65 sowie die zugehörigen Submenüpunkte 66 dargestellt. Im dargestellten Ausführungsbeispiel ist der Submenüpunkt 66 "Settings"("Einstellungen") aktiv ausgewählt. Die getroffene Auswahl, der Submenüpunkt 66 "Settings"("Einstellungen"), ist im hierarchisch höherstehenden Visualisierungsbereich 62 durch einen Auswahlindikator 71 hervorgehoben werden. Der Auswahlindikator 71 kann ein vorangestelltes Icon, eine optische Hervorhebung, beispielsweise durch einen Rahmen und/oder eine farblich abweichende Gestaltung sein.

Die Darstellungsgröße des jeweiligen Visualisierungsbereiches 61, 62, 63 nimmt hierarchisch absteigend zu, d.h. der Visualisierungsbereich 61 der obersten Hierarchieebene nimmt den geringsten Bereich der für die Visualisierung zur Verfügung stehenden Fläche der Bedien- und Anzeigeeinheit 23 ein.

Bevorzugt werden im Menüband 67 die Auswahloptionen 68 und Einstelloptionen 69 als Icons und/oder Piktogramme dargestellt. Die Icons oder Piktogramme sind hier und vorzugsweise dabei durch ihre spezifische Gestaltung selbsterklärend ausgeführt, so dass die Bedienperson 37 sich daran orientieren kann, ohne dass es eines zusätzlichen Kontextes bedarf. Denkbar ist ein zusätzliches Einblenden eines Kontextfensters zur Erläuterung der in dem Menüband 67 enthaltenen Auswahloptionen 68 und Einstelloptionen 69.

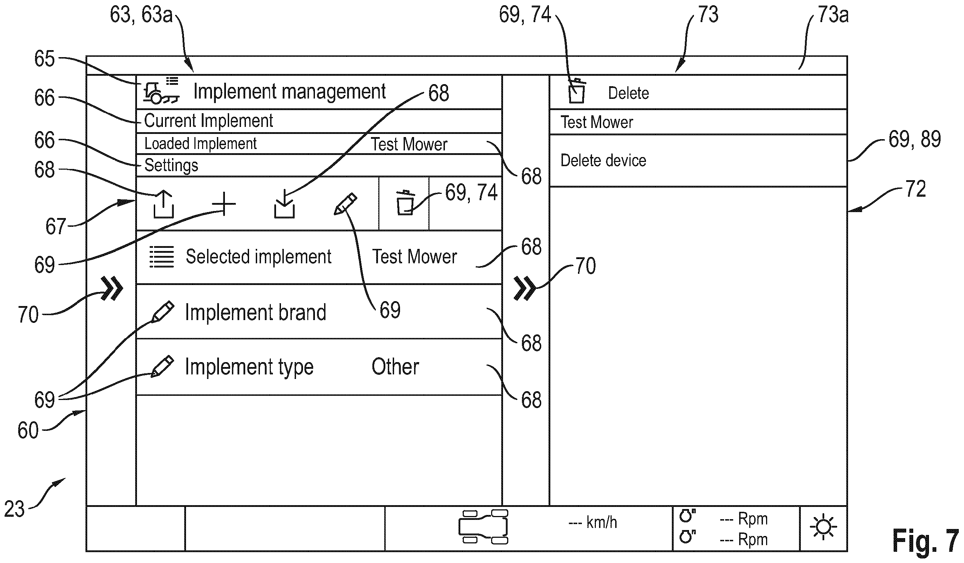

In Fig. 7 ist beispielhaft dargestellt, wie sich die Darstellung durch die Bedien- und Anzeigeeinheit 23 durch die Auswahl einer spezifischen Einstelloption 69, hier einer Löschoption 74, im Menüband 67, mit der das Löschen eines bestehenden bedienerspezifischen Basisdatensatzes 47 für ein Scheibenmähwerk 3, 4 bewirkt werden kann, d.h. eine Einstellung geändert werden, ändert. Aufgrund der Auswahl der Löschoption 74 "Delete" ("Löschen") als eine Einstelloption 69 werden in einer zweiten Bedien- und Anzeigeebene 72 die beiden hierarchisch höherstehenden Visualisierungsbereiche 61 und 62 durch einen Einstell- und Visualisierungsbereich 73 überblendet bzw. überlagert. Der Einstell- und Visualisierungsbereich 73 dient der Auswahl und/oder Einstellung von Einstellparametern, wozu auch das Löschen eines einzelnen Einstellparameters bis hin zu einem vollständigen Datensatz zählen. Für die Auswahl und/oder Einstellung ist das Fahrerassistenzsystem 21 zu einer dialogbasierten, natürlichsprachigen Bestimmung der Einstellparameter eingerichtet.

In dem zweiten Einstell- und Visualisierungsbereich 73 können neben den als Piktogramm ausgeführten Auswahloptionen 68 darüber hinaus auch Erläuterungen dargestellt werden. Im exemplarisch dargestellten Fall der Löschoption 74 der im Kontextfeld 73a zugehörige Kontext "Delete" ("Löschen") sowie das von der Auswahl betroffene Objekt, d.h. beispielsweise ein geladener Basisdatensatz 47 der Arbeitsmaschine 2, des Scheibenmähwerkes 3, 4 und/oder eines Arbeitsaggregates 29, 34.

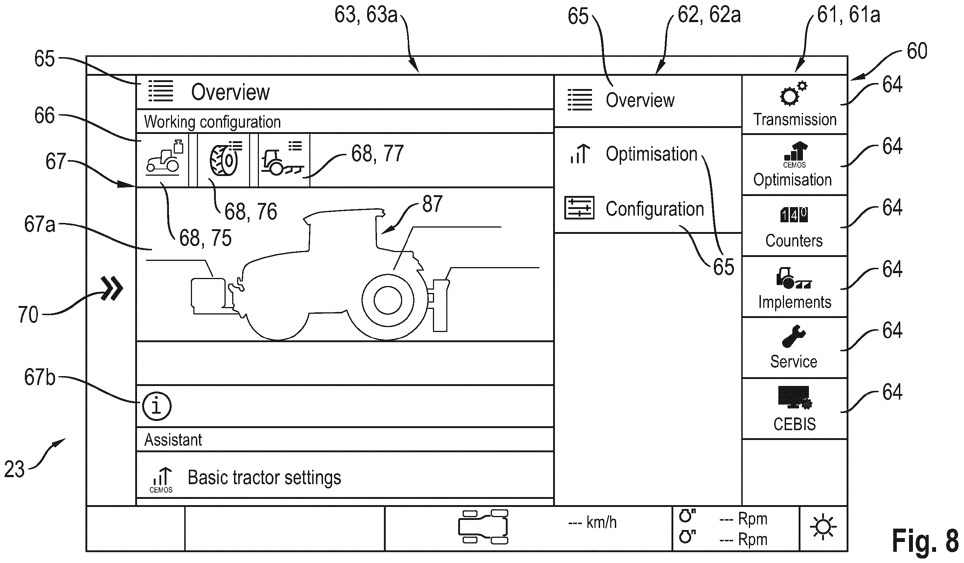

Fig. 8 zeigt exemplarisch die Auswahl des Hauptmenüpunktes 64 "Optimisation" ("Optimierung") im Visualisierungsbereich 61, welchem das Modul "Strategie" 38 und das Modul "Einstellungen" 39 und dessen Einzelmodule "Maschinendaten" 39a, "Basiseinstellungen" 39b, und "Arbeitsziel" 39c des Fahrerassistenzsystems 21 zur Abarbeitung zugeordnet sind, sowie die Auswahl des Menüpunktes 65 "Overview" ("Übersicht") im Visualisierungsbereich 62.

In dem im hierarchisch niedrigsten Visualisierungsbereich 63 angezeigten Menüband 67 sind Icons bzw. Piktogramme 75, 76, 77 als Auswahloptionen 68 dargestellt, welche die Einstellparameter Ballastierung (Piktogramm 75), Reifendruck, Reifengeometrie und Achslast (Piktogramm 76) sowie Basiseinstellungen (Piktogramm 77) für das zumindest eine Scheibenmähwerk 3, 4 betreffen. Unterhalb des Menübandes 67 wird in einem separaten Darstellabschnitt 67a abstrahiert die Arbeitsmaschine 2 oder das Scheibenmähwerk 3 als Symbol 87 dargestellt sowie eine prinzipielle Zuordnung der Piktogramme 75, 76 und 77. Unterhalb des Darstellabschnitts 67a kann ein Informationsfeld 67b vorgesehen sein, in welchem zusätzliche Hinweise eingeblendet werden, die im Zusammenhang mit einer vorgeschlagenen Empfehlung für den aktuell anzupassenden Einstellparameter 49 stehen.

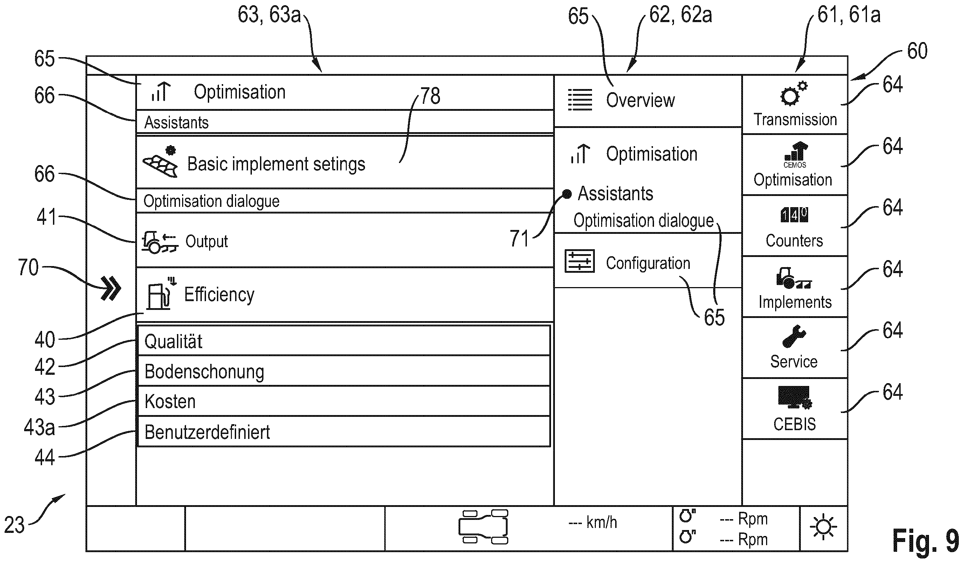

Fig. 9 zeigt exemplarisch die getroffene Auswahl des Hauptmenüpunktes 64 "Optimisation" ("Optimierung") im hierarchisch höchsten Visualisierungsbereich 61, sowie die Auswahl des gleichlautenden Menüpunktes 65 "Optimisation" ("Optimierung") im Visualisierungsbereich 62. Auch hier wird im Visualisierungsbereich 62 unterhalb des Menüpunktes 65 zusätzlich eine Übersicht der in der Submenüebene 63a des Visualisierungsbereiches 63 enthaltenen Submenüpunkte 66 dargestellt.

Die Auswahl eines der Submenüpunkte 66 im Visualisierungsbereich 63 führt zum wahlweisen Starten des Moduls "Strategie" 38 oder des Moduls "Basiseinstellung Maschinenanordnung" 39. Der Submenüpunkt 66 "Optimisation dialogue" ("Optimierungsdialog") umfasst die Strategien 40 "Effizienz" sowie "Leistung" 41. Der Submenüpunkt 66 "Assistants" ("Assistenten") umfasst das Modul "Basiseinstellung Maschinenanordnung" 39 und dessen Abarbeitung. Der ausgewählte Submenüpunkt 66 "Assistants" ("Assistenten") bietet hierfür einen Assistenten 78 "Basic implement setting" ("Grundeinstellung des Anbaugerätes") zur Auswahl an, welcher der dialogbasierten Konfiguration des zumindest einen Scheibenmähwerkes 3, 4 dient.

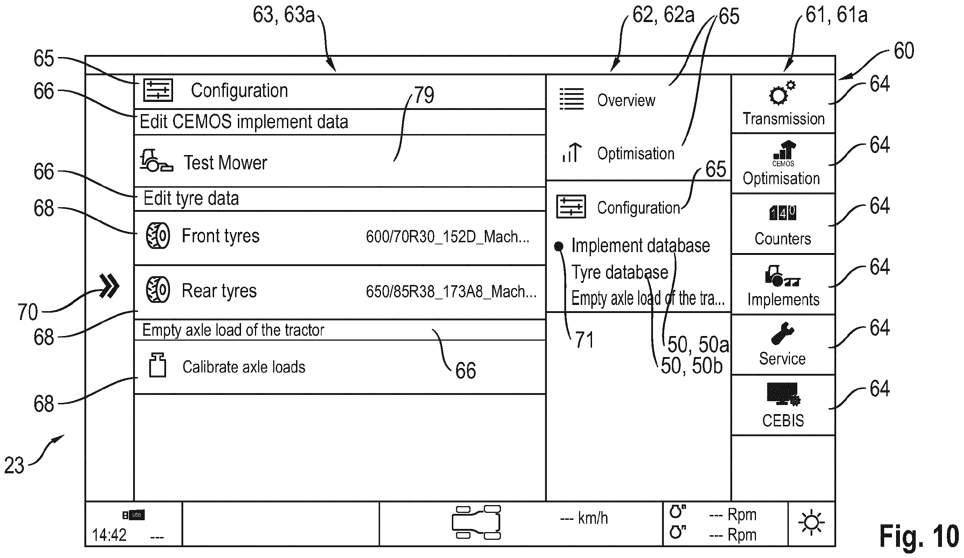

Fig. 10 zeigt exemplarisch die Auswahl des Menüpunktes 65 "Configuration" ("Konfiguration") im Visualisierungsbereich 62, sowie die Auswahl der Submenüpunkte 66, die dem Menüpunkt 65 "Configuration" ("Konfiguration") auswählbar zugeordnet sind. Im Visualisierungsbereich 63 ist im Dialogfeld 79 die Bezeichnung eines aktuell aus der Datenbank 50 abgerufenen Datensatzes des Scheibenmähwerks 3, 4 dargestellt. Die Submenüpunkte 66 zeigen die im Rahmen des Menüpunktes 65 "Configuration" ("Konfiguration") zur Verfügung stehenden auswählbaren Auswahloptionen 68 an. Der Submenüpunkt 66 "Edit CEMOS implement data" ("CEMOS Gerätedaten bearbeiten") weist im Dialogfeld 79 die Bezeichnung des aus der Datenbank 50, die eine spezifische Anbaugerätedatenbank 50a für Scheibenmähwerke umfasst, ausgewählten Scheibenmähwerkes 3, 4 aus. Bei dem Begriff "CEMOS" handelt sich um eine registrierte Marke der CLAAS KGaA mbH. Die anhand der Anbaugerätedatenbank 50a getroffene Auswahl wird durch den Auswahlindikator 71 hervorgehoben. Als Auswahloptionen 68 des Submenüpunktes 66 "Edit tyre data" ("Reifendaten bearbeiten") stehen die Auswahl und/oder Einstellung der Bereifung an Vorderachse 12 und Hinterachse 13 der Arbeitsmaschine 2 zur Verfügung. Zur Auswahl der jeweiligen Bereifung steht die Datenbank 50, die eine spezifische Reifendatenbank 50b umfasst, zur Verfügung. Als Auswahloptionen 68 des Submenüpunktes 66 "Empty axle load of the tractor" ("Achslast des Traktors im Leerzustand")" steht die Auswahloption 68 " "Calibrate axle loads" ("Kalibrierung der Achslast") zur Verfügung, um die Achslast voreinzustellen.

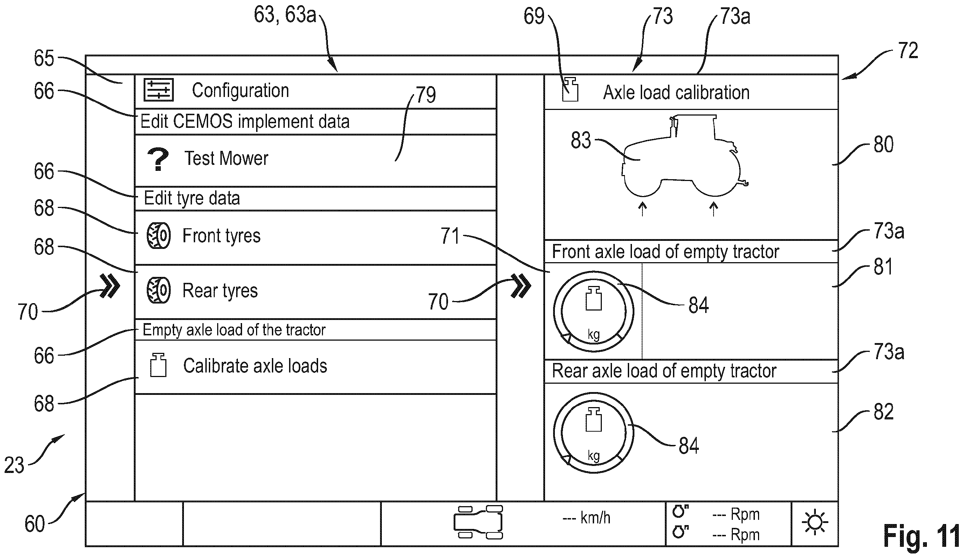

In Fig. 11 ist die Anzeige- und Bedieneinheit 23 nach der Auswahl einer der zur Verfügung stehenden Auswahloptionen 68, hier beispielhaft der Auswahloption "Calibrate axle loads" ("Kalibrierung der Achslast") dargestellt. Die Auswahl der Auswahloption 68 im hierarchisch niedrigsten Visualisierungsbereich 63 bewirkt, dass in der zweiten Bedien- und Anzeigeebene 72 die beiden hierarchisch höherstehenden Visualisierungsbereiche 61 und 62 durch den Einstell- und Visualisierungsbereich 73 überblendet bzw. überlagert werden.

Im Einstell- und Visualisierungsbereich 73 der zweiten Bedien- und Anzeigeebene 72 werden, in auf mehrere Teilbereiche 80, 81, 82 verteilt, die aufgrund der gewählten Auswahloption 68, hier beispielhaft der Auswahloption "Calibrate axle loads" ("Kalibrierung der Achslast"), die damit korrespondierende einzustellende Komponente im Teilbereich 80, bei der es sich im vorliegenden Fall um die Arbeitsmaschine 2 handelt, dargestellt. Die einzustellende Komponente wird im Teilbereich 81 als Icon oder Piktogramm 83 dargestellt. Die Auswahloption 68 "Calibrate axle loads" ("Kalibrierung der Achslast") kann dann zur Verfügung stehen, wenn für eine zu betreibende und optimierende Maschinenanordnung 1 hinsichtlich der Arbeitsmaschine 2 keine Informationen oder nur unvollständige Informationen zu Einstellparametern 49 hinterlegt sind, welche die Achslast betreffen. Den Teilbereichen 80, 81, 82 können Kontextfelder 73a zugeordnet sein, welche Erläuterungen in grafischer und/oder textbasierter Form enthalten.

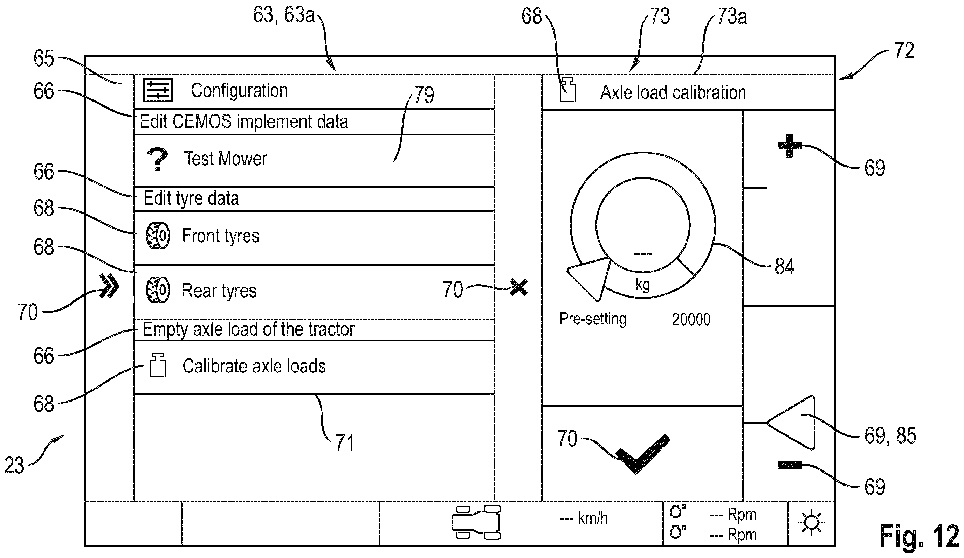

In den Teilbereichen 81 und 82 sind die spezifischen Parameter der einzustellenden Komponente benannt, hier die "Front axle load" ("Vorderachslast") im Teilbereich 81 und die die "Rear axle load" ("Hinterachslast") im Teilbereich 82. In den Teilbereichen 81 und 82 wird zudem der zugehörige eingestellte Wert, hier für die eingestellte Achslastverteilung, mittels eines Anzeigefeldes 84 dargestellt. Das jeweilige Anzeigefeld 84 ist als Kombinationsfeld ausgeführt. Die Ausführung des Anzeigefeldes 84 als Kombinationsfeld ermöglicht die Darstellung des eingestellten Wertes, hier für eine Achslast, als Absolutwert sowie in grafischer Form, beispielsweise in der Form eines Ringdiagrammes. Durch die Auswahl der Einstelloption 69 "Axle load calibration" (Achslastkalibrierung") im Teilbereich 80, beispielsweise durch Berührung der Oberfläche der Bedien- und Anzeigeeinheit 23, durch virtuelle Bedienelemente und/oder durch eine manuelle Betätigung von elektromechanischen Bedienelementen, die der Bedien- und Anzeigeeinheit 23 zugeordnet sind, wird die Darstellung in dem Einstell- und Visualisierungsbereich 73 der zweiten Bedien- und Anzeigeebene 72 geändert, wie in Fig. 12 exemplarisch dargestellt ist. Die virtuellen und/oder elektromechanischen Bedienelemente können beispielsweise als Schalter, Taster, Drehrad, Schieber, Dreh-Druck-Schalter und dergleichen mehr ausgeführt sein.

In Fig. 12 ist der geänderte Einstell- und Visualisierungsbereich 73 der zweiten Bedien- und Anzeigeebene 72 der Anzeige- und Bedieneinheit 23 nach Auswahl der Einstelloption 69 "Achslastkalibrierung" dargestellt. Im Einstell- und Visualisierungsbereich 73 ist ein Kontextfeld 73a dargestellt der mit der gewählten Auswahloption 68 korrespondiert. Unterhalb des Kontextfeldes 73a befindet sich eine grafische Visualisierung zumindest eines Einstellparameters, hier der eingestellten Achslastverteilung Die Einstellung eines Wertes für die Achslastverteilung erfolgt mittels der Einstelloptionen 69 und der Bedienoptionen 70, die in dem Einstell- und Visualisierungsbereich 73 dargestellt sind. Während die beispielhaft als Plus-Symbol ("+") und Minus-Symbol "-" ausgeführten Einstelloptionen 69 der Einstellung des Wertes für die Achslastverteilung dienen, lässt sich mittels der Bedienoptionen 70 ein eingestellter Wert bestätigen und abspeichern oder der Vorgang als solcher abbrechen. Durch die Betätigung einer der Bedienoptionen gelangt die Bedienperson 37 zur vorherigen Darstellung gemäß Fig. 11 zurück. Im Einstell- und Visualisierungsbereich 73 kann zusätzliche eine als Marker 85 ausgeführte Einstelloption 69 vorgesehen sein. Die Bedienung des Markers 85 kann durch eine lineare Schiebebewegung erfolgen.

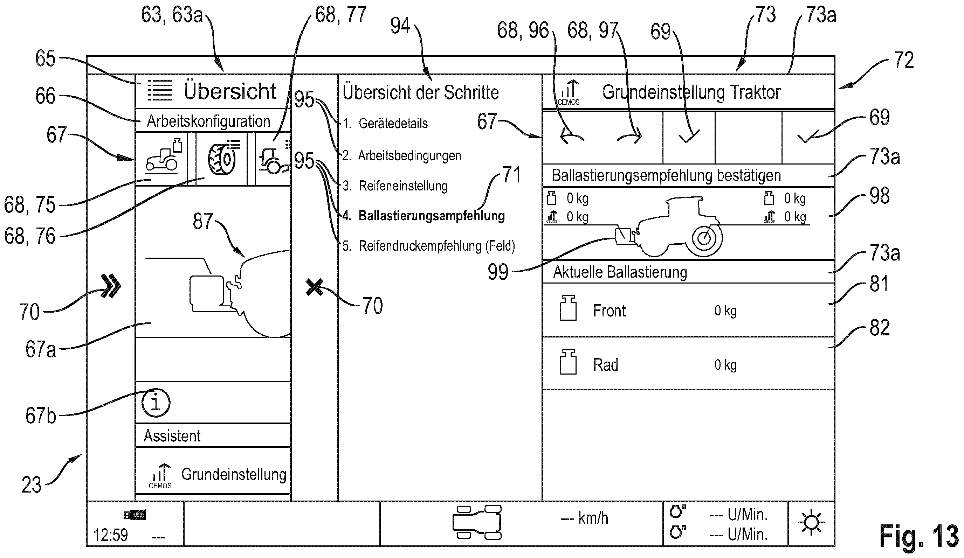

In Fig. 13 ist beispielhaft eine Ansicht der Anzeige- und Bedieneinheit 23 dargestellt, welche sich einstellen kann, wenn die Abarbeitung des Einzelmoduls "Maschinendaten" 39b durchgeführt wird. Im Einstell- und Visualisierungsbereich 73 ist beispielhaft ein Teil des Ablaufs dargestellt, welcher beim Ausführen des Verfahrensschrittes 54a zur Basiseinstellung der Arbeitsmaschine 2 vorgenommen wird. Hierzu wird der Einstell- und Visualisierungsbereich 73 aufgeteilt, um in einem separaten Segment 94 des Einstell- und Visualisierungsbereiches 73 eine Übersicht von einem oder mehreren Einstellschritten 95, der oder die von der Bedienperson 37 beim Ausführen des Verfahrensschrittes 54a zur Basiseinstellung der Arbeitsmaschine 2 abzuarbeiten sind, darzustellen. Mittels der im Dialogfeld 67 angezeigten Auswahloptionen 68, die als Richtungspfeile 96, 97 ausgeführt sind, kann die Bedienperson 37 zwischen den Dialogabfragen des jeweiligen Einstellschrittes 95 sowie den Einstellschritten 95 selbst navigieren. Dabei erlauben die Richtungspfeile 96, 97 ein Vor- und Zurückspringen. Ein jeweils aktiver Einstellschritt 95 ist hervorgehoben dargestellt, hier der Einstellschritt 95 "Ballastierungsempfehlung". Die Bezeichnung Einstellschritt 95 ist in der Weise zu verstehen, dass sich dahinter eine oder mehrere Dialogabfragen verbergen. Die Beantwortung aller vorgesehener Dialogabfragen eines Einstellschrittes 95 durch die Bedienperson 37 im Zuge der Verfahrensschritte 54 bis 58 kann zwingend sein, um zum nachfolgenden Einstellschritt 95 zu gelangen.

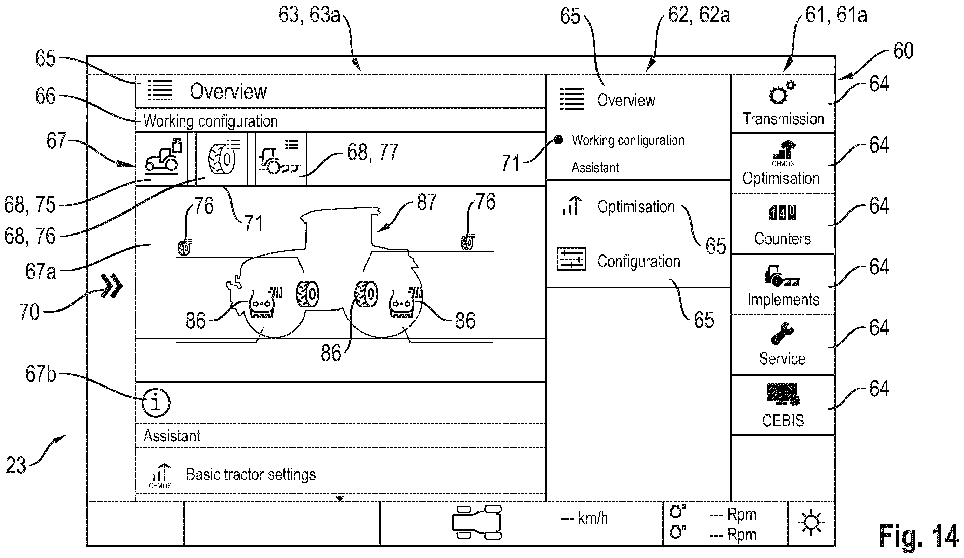

In Fig. 14 ist exemplarisch die Auswahl des Hauptmenüpunktes 64 "Optimisation" ("Optimierung") gemäß Fig. 8 im Visualisierungsbereich 61 dargestellt, sowie die Auswahl des Menüpunktes 65 "Overview" ("Übersicht") im Visualisierungsbereich 62. In dem im hierarchisch niedrigsten Visualisierungsbereich 63 ist mittels des angezeigten Menübandes 67 als Auswahloptionen 68 die Arbeitskonfiguration für die Einstellparameter Reifendruck, Reifengeometrie und Achslast der Arbeitsmaschine 2, visualisiert durch das im Menüband 67 hervorgehoben dargestellte Piktogramm 76, ausgewählt. In dem separaten Darstellabschnitt 67a werden entsprechend der gewählten Auswahloptionen 68 abstrahierte Icons oder Piktogramme 76, 86 eingeblendet, welche im dargestellten Ausführungsbeispiel die mit der Auswahloption 68 verbundenen Einstellparameter Reifendruck und Reifengeometrie veranschaulichen. Die hier vornehmbaren Einstellungen sind im Einzelmodul "Basiseinstellungen" 39b enthalten.

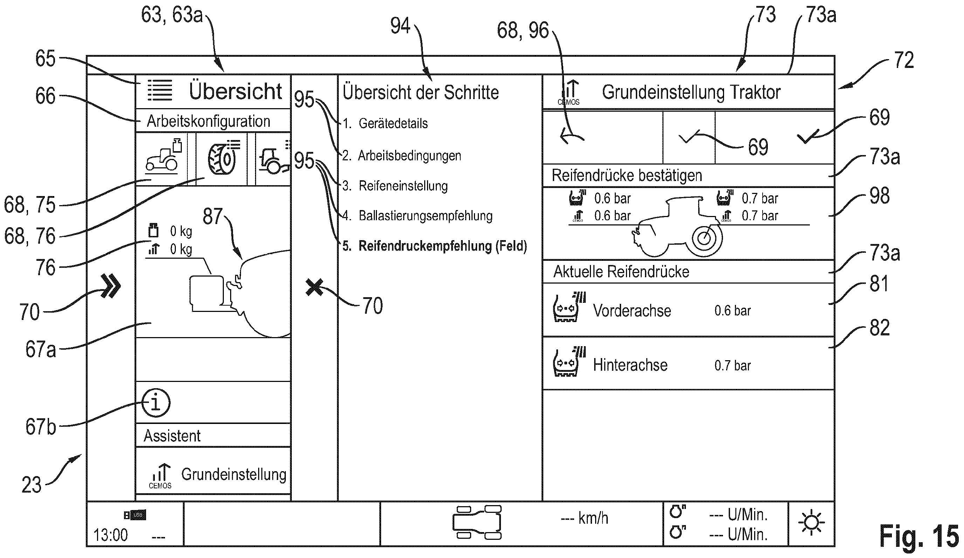

In Fig. 15 ist beispielhaft eine Ansicht der Anzeige- und Bedieneinheit 23 dargestellt, welche sich einstellen kann, wenn im Zuge der Abarbeitung des Einzelmoduls "Maschinendaten" 39b der Einstellschritt 95 "Ballastierungsempfehlung" durchgeführt wurde und zum nächsten Einstellschritt 95 "Reifendruckempfehlung (Feld)" übergegangen wird.

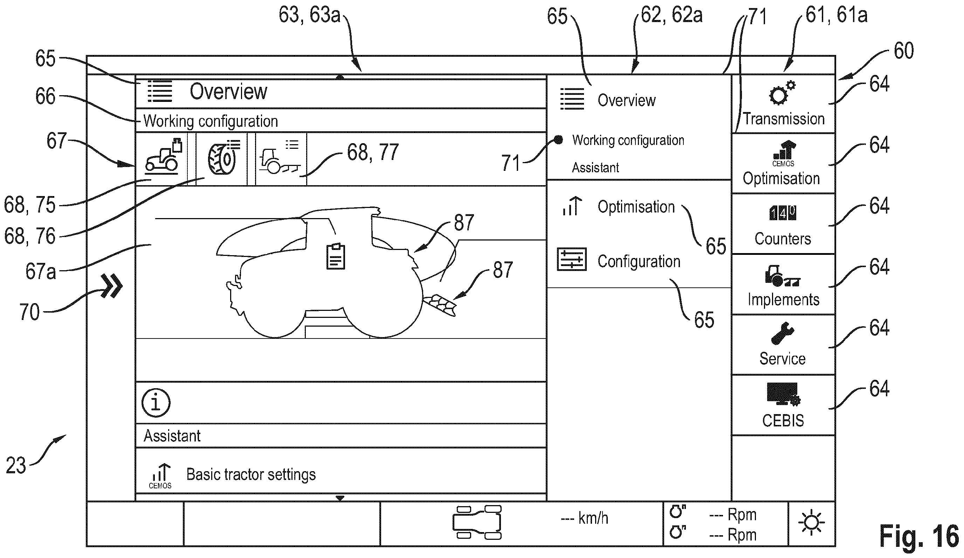

In Fig. 16 ist exemplarisch die Auswahl des Hauptmenüpunktes 64 "Optimisation" ("Optimierung") gemäß Fig. 8 im Visualisierungsbereich 61 dargestellt, sowie die Auswahl des Menüpunktes 65 "Overview" ("Übersicht") im Visualisierungsbereich 62. In dem im hierarchisch niedrigsten Visualisierungsbereich 63 ist mittels des angezeigten Menübandes 67 als Auswahloptionen 68 die Arbeitskonfiguration getroffene Basiseinstellungen (Piktogramm 77) für das zumindest eine Scheibenmähwerk 3, 4, visualisiert durch das im Menüband 67 hervorgehoben dargestellte Piktogramm 77, ausgewählt.

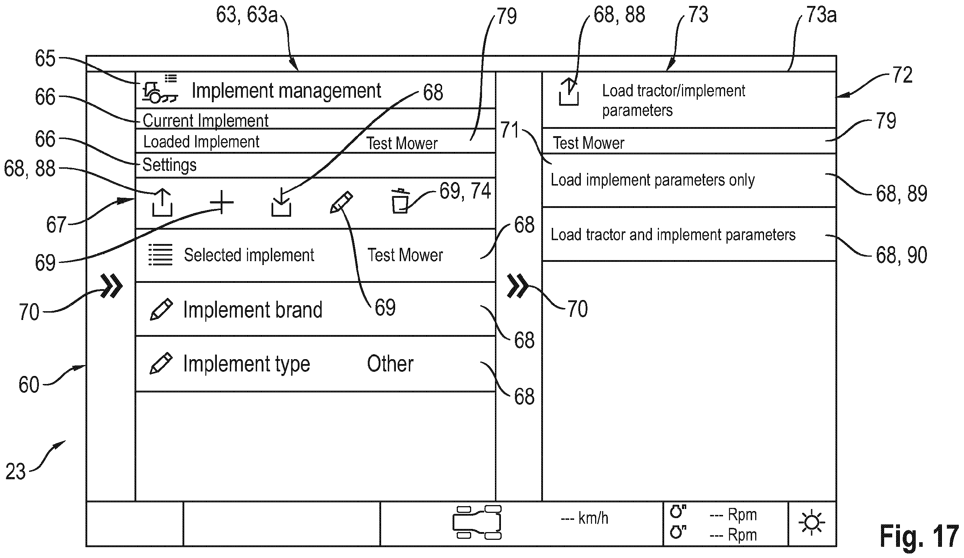

Fig. 17 zeigt eine Ansicht der Anzeige- und Bedieneinheit 23 gemäß Fig. 6, welche durch Betätigung einer der Auswahloptionen 68, hier einer Auswahloption "load tractor/implement parameters" ("Laden Einstellparameter Arbeitsmaschine/ Anbaugerät") 88, das auswählbare Laden eines bestehenden Datensatzes 46, 47 für eine Arbeitsmaschine 2 und/oder ein Scheibenmähwerk 3, 4 dargestellt wird. Dabei werden im Einstell- und Visualisierungsbereich 73 der zweiten Bedien- und Anzeigeebene 72 unterhalb des Kontextfeldes 73a entsprechend der Betätigung der Auswahloption 68, 88 aus dem Menüband 67 die zur Verfügung stehenden Einstelloptionen 89 "Load implement parameteres only" ("Nur Laden der Anbaugeräteparameter") oder "Load tractor and implement parameteres" ("Laden der Arbeitsmaschinen- und Anbaugeräteparameter") 90.

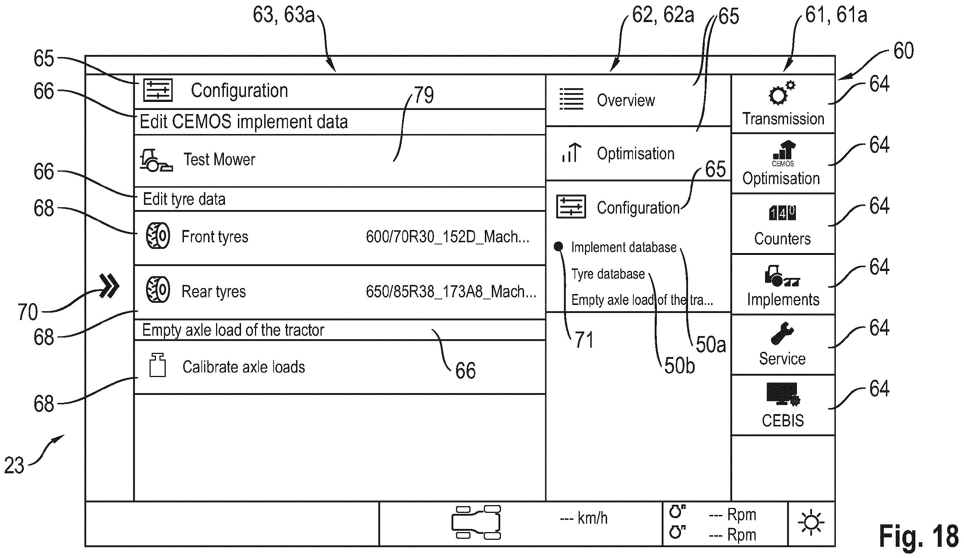

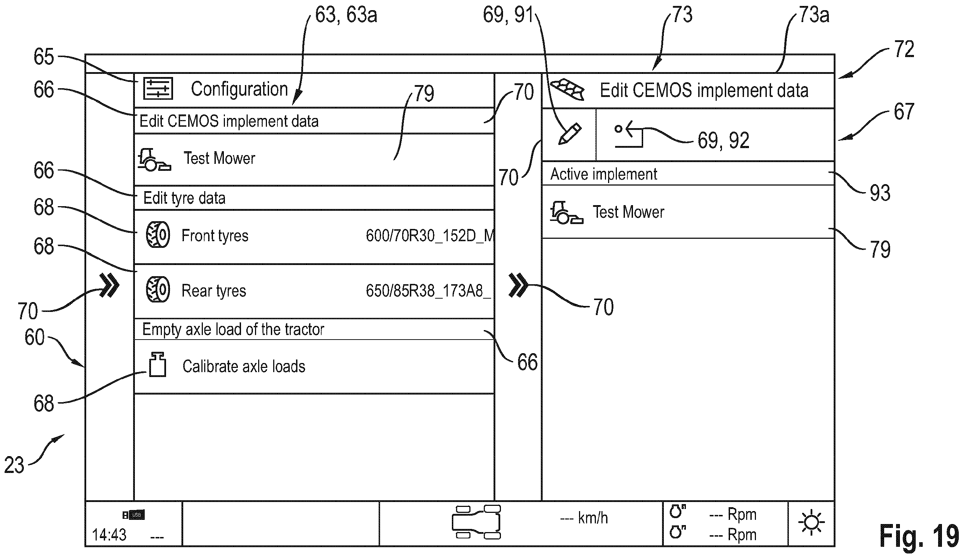

Die Darstellung in Fig. 18 zeigt eine Ansicht der Anzeige- und Bedieneinheit 23 gemäß Fig. 10, welche durch die Auswahl des Hauptmenüpunktes 64 "Optimisation" und des zugehörigen Menüpunktes 65 "Configuration" ("Konfiguration") aktiviert bzw. dargestellt wird. Im Visualisierungsbereich 63 ist im Dialogfeld 79 die Bezeichnung eines aktuell aus der Datenbank 50, hier der Anbaugerätedatenbank 50a, abgerufenen Datensatzes 46, 47 des Scheibenmähwerks 3, 4 dargestellt. Durch die Anwahl respektive das Berühren des Dialogfeld 79 werden in der zweiten Bedien- und Anzeigeebene 72 die beiden hierarchisch höherstehenden Visualisierungsbereiche 61 und 62 durch den Einstell- und Visualisierungsbereich 73 der zweiten Bedien- und Anzeigeebene 72 überblendet bzw. überlagert, was in Fig. 17 dargestellt ist. In dem Einstell- und Visualisierungsbereich 73 wird unterhalb des Kontextfeldes 73a ein Dialogband 67 angezeigt, welches analog dem Dialogband 67 des hierarchisch niedrigsten Visualisierungsbereich 63 der ersten Bedien- und Anzeigeebene 60 gestaltet ist. In dem Dialogband 67 des Einstell- und Visualisierungsbereiches 73 werden die verfügbaren Einstelloptionen 69 dargestellt, hier ein Icon oder Piktogramm 91, welches die Editierfunktion bildet sowie das Icon oder Piktogramm 92, dessen Auswahl das Verlassen des Einstell- und Visualisierungsbereiches 73 der zweiten Bedien- und Anzeigeebene 72 ermöglicht. Unterhalb eines Zusatzfeldes 93 "Acitve implement" ("Aktives Anbaugerät") wird im Dialogfeld 79 die Bezeichnung des aktuell aus der Datenbank 50 abgerufenen Datensatzes 46, 47 des Scheibenmähwerks 3, 4 dargestellt. Wie in Fig. 19 weiter dargestellt, ist im Dialogmenü 67 die durch das Icon oder Piktogramm 91 dargestellte Einstelloptionen 69 aktiviert.

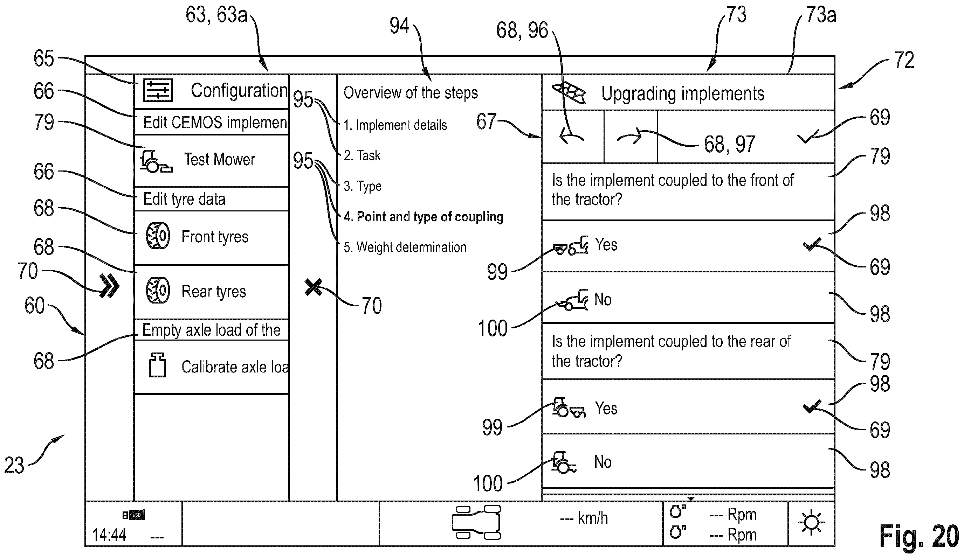

In Fig. 20 ist die Ansicht der Anzeige- und Bedieneinheit 23 dargestellt, welche sich aus der Betätigung bzw. Auswahl des Icons oder Piktogramms 91 im Dialogmenü 67 gemäß Fig. 19 ergibt. Im Einstell- und Visualisierungsbereich 73 ist beispielhaft ein Teil des Ablaufs dargestellt, welcher beim Ausführen des Verfahrensschrittes 53 zur Basiseinstellung eines nachgerüsteten Scheibenmähwerkes vorgenommen wird. Hierzu wird der Einstell- und Visualisierungsbereich 73 aufgeteilt, um in einem separaten Segment 94 des Einstell- und Visualisierungsbereiches 73 eine Übersicht von einem oder mehreren Einstellschritten 95, der oder die von der Bedienperson 37 beim Ausführen des Verfahrensschrittes 53 zur Basiseinstellung abzuarbeiten sind, darzustellen. Zugleich werden mit dem jeweiligen Einstellschritt 95 korrespondierende Abfragen in den Dialogfelder 79 sowie Einstelloptionen 69 und/oder Auswahloptionen 68 in den zugehörigen Anzeigesegmenten 98 dargestellt. In Fig. 20 ist dies beispielhaft an dem Schritt "Point and type of coupling" ("Ort und Art der Anhängung") als Teil der vorzunehmenden Basiseinstellung erläutert. In den Dialogfeldern 79 wird schrittweise abgefragt, an welchem Ort das einzustellende Scheibenmähwerk 3, 4 angeordnet ist. Mittels der im Dialogfeld 67 angezeigten Auswahloptionen 68, die als Richtungspfeile 96, 97 ausgeführt sind, kann die Bedienperson 37 zwischen den Dialogfeldern 79 navigieren. Dabei erlauben die Richtungspfeile 96, 97 ein Vor- und Zurückspringen. Mit der Betätigung der Einstelloption 69 wird eine getätigte Eingabe zu einem Einstellschritt 95 durch die Bedienperson 37 abgeschlossen, um die eingegebenen Informationen abzuspeichern.

Die Anzeige der in den Dialogfeldern 79 und den zugehörigen Anzeigesegmenten 98 dargestellten Einstelloptionen 69 und/oder Auswahloptionen 68 variieren dabei in Abhängigkeit von dem jeweils auszuführenden Einstellschritt 95. In den Anzeigesegmenten 98 wird korrespondierend mit den möglichen Einstelloptionen 69 und/oder Auswahloptionen 68 eine grafische Darstellung 99, 100 zumindest einer einzustellenden Komponente, beispielsweise der Arbeitsmaschine 2 und /oder des Scheibenmähwerkes 3, 4 als Ganzes, oder einzelner Arbeitsaggregate 29, 34, eingeblendet, um den Kontext der im Dialogfeld 79 angezeigten natürlichsprachigen Fragestellung sowie die zugehörige Einstelloptionen 69 und/oder Auswahloptionen 68 zusätzlich zu veranschaulichen. Die Auswahl erfolgt durch Berühren des Anzeigesegmenten 98 oder durch die Betätigung eines Bedienelementes der Anzeige- und Bedieneinheit 23.

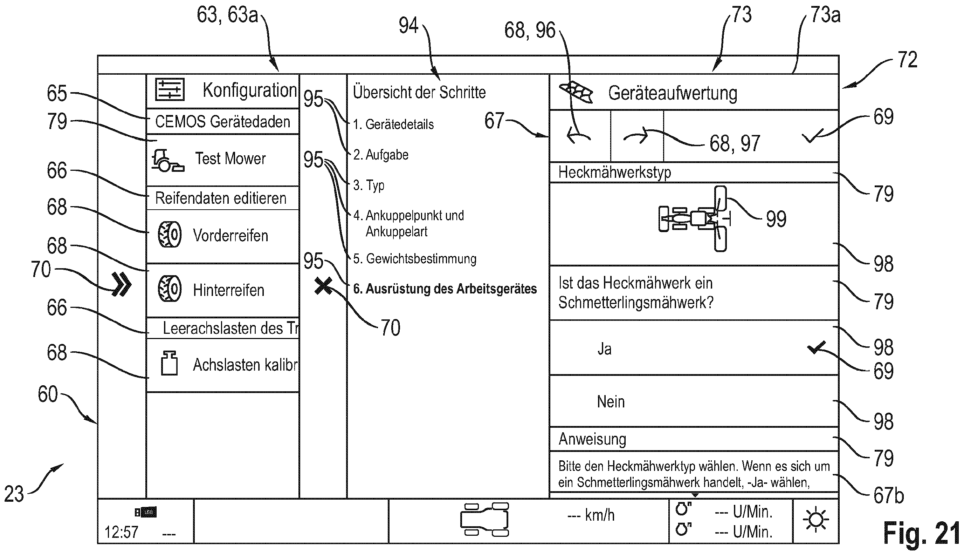

In den Fig. 21 bis 30 sind weitere exemplarisch einzelne Einstellschritte 95 dargestellt, die im Zuge der Ausführung des Einzelmoduls "Arbeitsziele" 39c in den Verfahrensschritten 57 oder 58 abgearbeitet werden.

Fig. 21 zeigt den abzuarbeitenden Einstellschritt 95 "Ausrüstung des Arbeitsgerätes" beispielhaft für die Dialogabfrage, um welchen Heckscheibenmähwerktyp es sich handelt. Hierzu wird in einem Anzeigesegment 98 unterhalb eines Dialogfeldes 79 eine für den Heckscheibenmähwerktyp spezifische grafische Darstellung 99 angezeigt, um der Bedienperson 37 zur Vereinfachung der Beantwortung der Dialogabfrage den Gegenstand zu veranschaulichen. Durch das Berühren eines der beiden Anzeigesegmente 98, welche die Antwort auf die Dialogabfrage enthalten, wird eine Auswahl getroffen und durch die Einstelloptionen 69 als aktiv gekennzeichnet. Mit der Beantwortung dieser Dialogabfrage wird die Auswahloption 68 im zugehörigen Menüband 67 des Einstell- und Visualisierungsbereiches 73 aktiviert, um zu einem nachfolgenden Einstellschritt 95 zu gelangen oder die Ausführung des Einzelmoduls "Arbeitsziele" 39c abschließen zu können, um zum Verfahrensschritt 59 "Modulende" gemäß Fig. 5 zu gelangen.

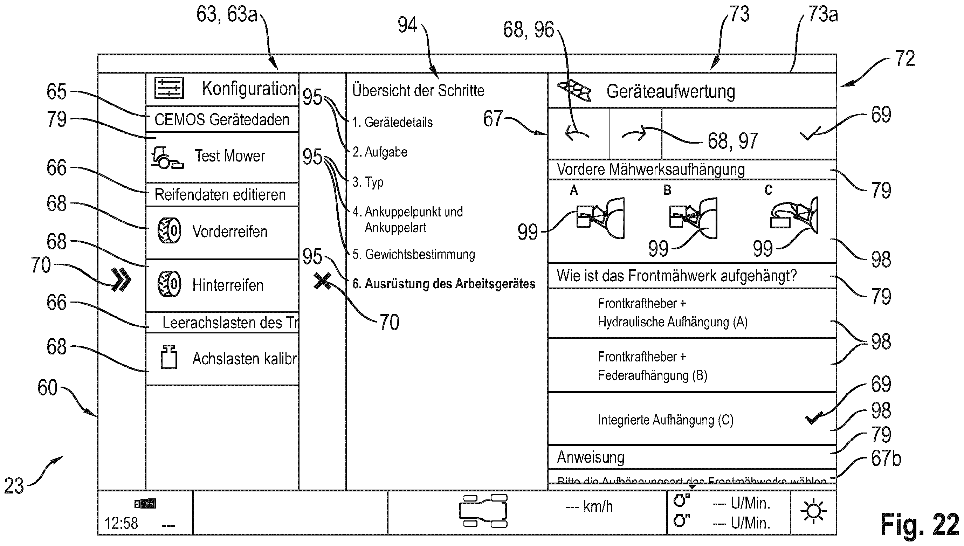

Fig. 22 zeigt den ausgewählten Einstellschritt 95 "Ausrüstung des Arbeitsgerätes" beispielhaft für die Dialogabfrage, wie das Frontscheibenmähwerk 3 an der Arbeitsmaschine 2 angeordnet ist. Hierzu werden in einem Anzeigesegment 98 unterhalb eines Dialogfeldes 79 mehrere grafische Darstellungen 99 angezeigt, welche die möglichen Arten der Anordnung an der Arbeitsmaschine 2 grafisch veranschaulichen. Der grafischen Veranschaulichung sind in dem weiteren Anzeigesegmente 98 die mit den grafischen Darstellungen 99 korrespondierenden Antwortmöglichkeiten dargestellt.

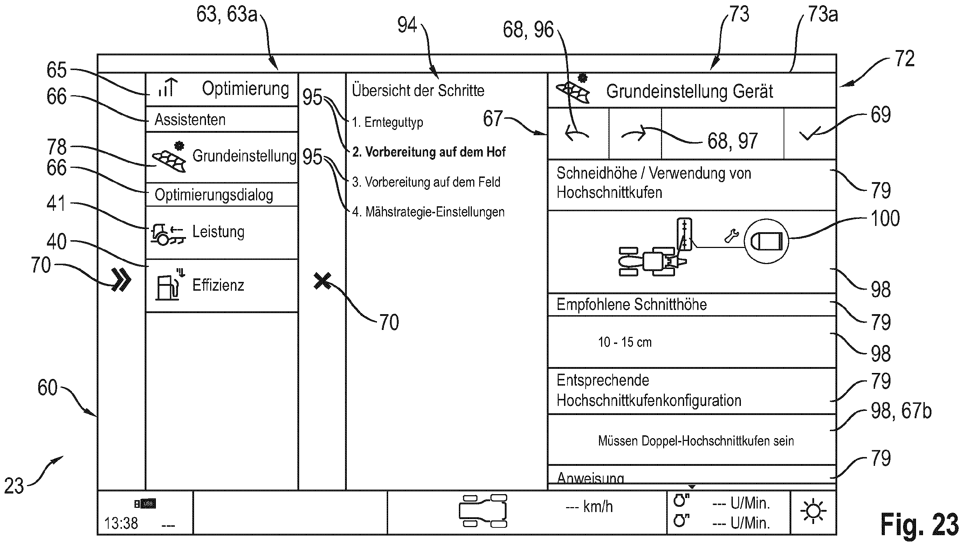

Fig. 23 zeigt eine Ansicht der Bedien-und Anzeigeeinheit 23, welche sich bei Auswahl des Submenüpunktes 66 "Assistants" ("Assistenten") gemäß Fig. 9 einstellt. Der Assistent 78 "Basic implement setting" ("Grundeinstellung des Anbaugerätes") umfasst wieder mehrere abzuarbeitende Einstellschritte 95, welcher der dialogbasierten Konfiguration des zumindest einen Scheibenmähwerkes 3, 4 im Zuge des Verfahrensschrittes 58 dienen. Hier ist beispielhaft der Einstellschritt 95 "Vorbereitung auf dem Hof" aktiv. Im Einstell- und Visualisierungsbereich 73 werden beispielhaft Informationen zur Dialogabfrage dargestellt, welche Schneidhöhe eingestellt werden soll und ob eine Verwendung von Hochschnittkufen erforderlich ist. Hierzu wird in einem Anzeigesegmente 98 unterhalb eines Dialogfeldes 79 eine für die Anordnung von Hochschnittkufen am Heckscheibenmähwerk 4 spezifische grafische Darstellungen 99 angezeigt. In den weiteren Dialogfeldern 79 und Anzeigesegmenten 98 werden eine empfohlene Schnitthöhe sowie eine für die Schnitthöhe spezifische Konfiguration der Hochschnittkufen dargestellt.

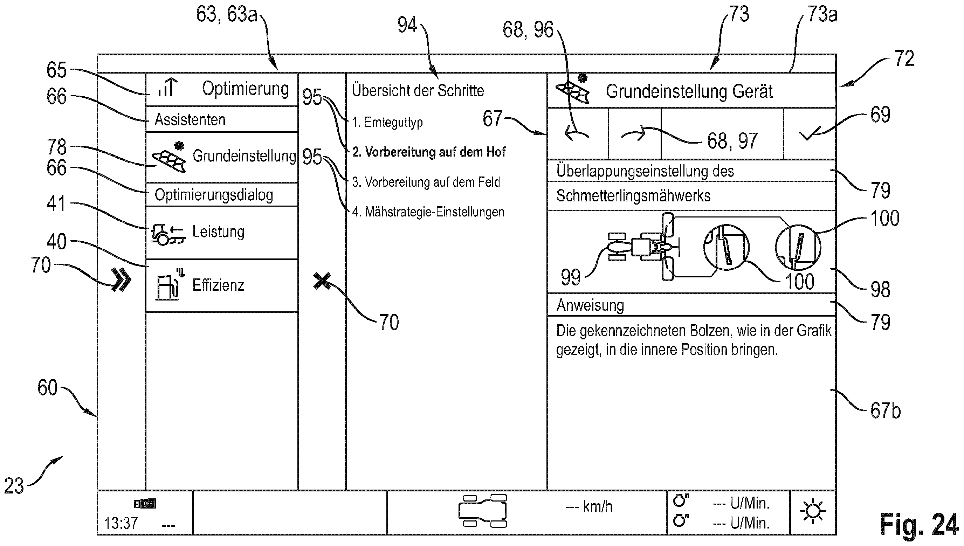

Fig. 24 zeigt den ausgewählten Einstellschritt 95 "Vorbereitung auf dem Hof" beispielhaft für einen Dialog die Überlappungseinstellung einer als Schmetterlingskombination ausgeführten Anordnung zweier Heckscheibenmähwerke 4.

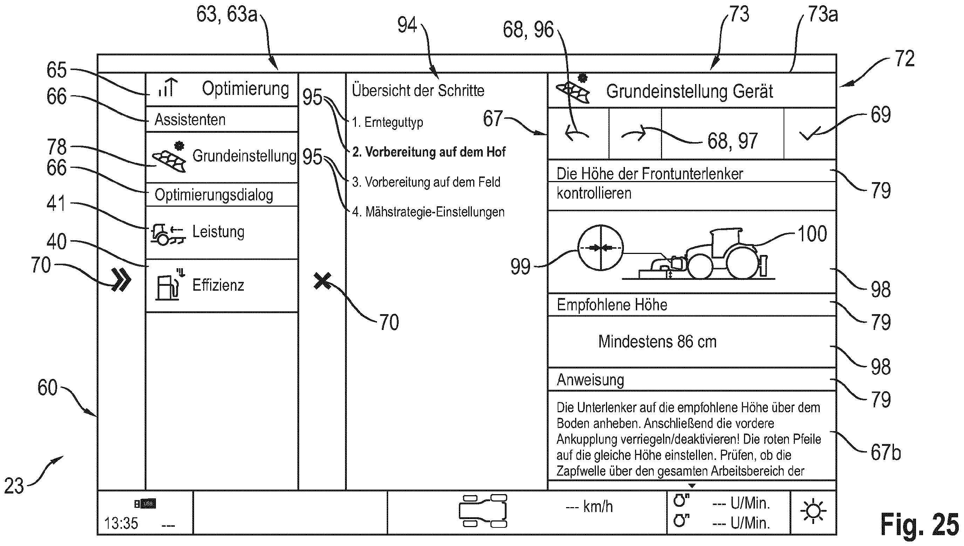

Fig. 25 zeigt ebenfalls den ausgewählten Einstellschritt 95 "Vorbereitung auf dem Hof" beispielhaft für den Hinweisdialog der Kontrolle der Höheneinstellung der Unterlenker des Hubwerkes 10. Neben einer empfohlenen Höhe, werden im Informationsfeld 67b zusätzliche textliche Anweisungen oder Hinweise gegeben, wie die Einstellung vorzunehmen ist. Ergänzende bzw. erläuternde visuelle Hinweise sind in einem der Anzeigesegmente 98 dargestellt.

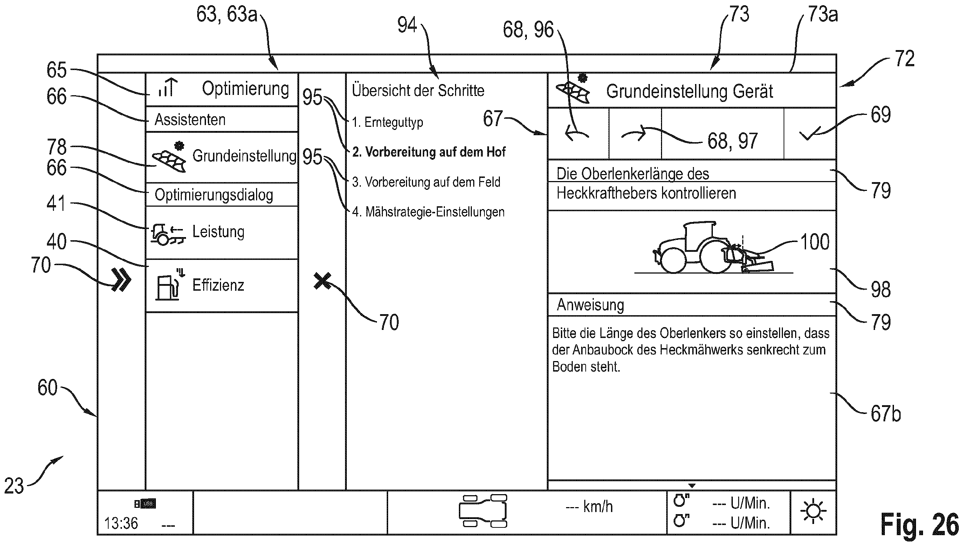

Fig. 26 zeigt weiterhin den ausgewählten Einstellschritt 95 "Vorbereitung auf dem Hof" beispielhaft für den Hinweisdialog der Kontrolle der Oberlenkerlänge des heckseitigen Hubwerkes 11 analog Fig. 25.

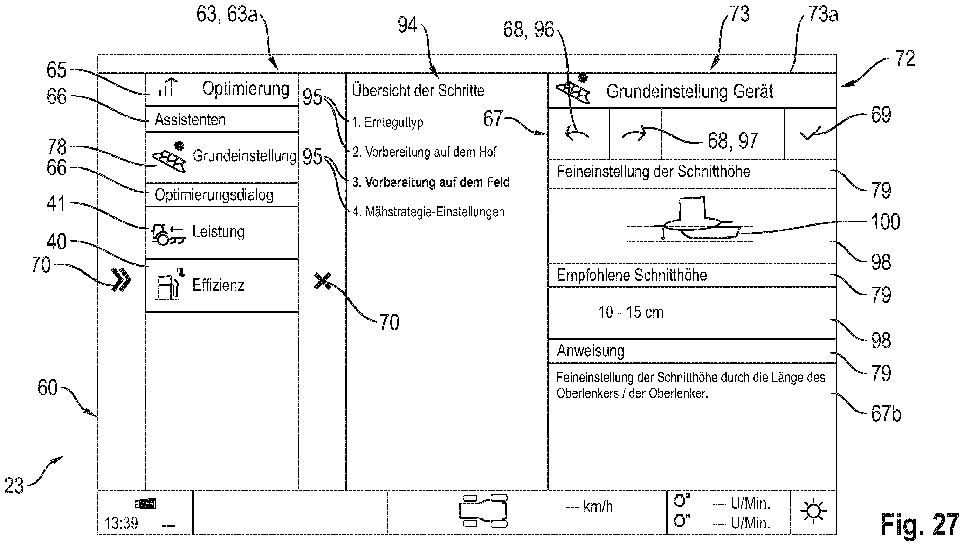

Fig. 27 zeigt den ausgewählten Einstellschritt 95 "Vorbereitung auf dem Feld" beispielhaft für einen Dialog zur Feineinstellung der Schnitthöhe, die zu einem früheren Zeitpunkt in dem vorangehenden Einstellschritt 95 "Vorbereitung auf dem Hof" eingestellt wurde.

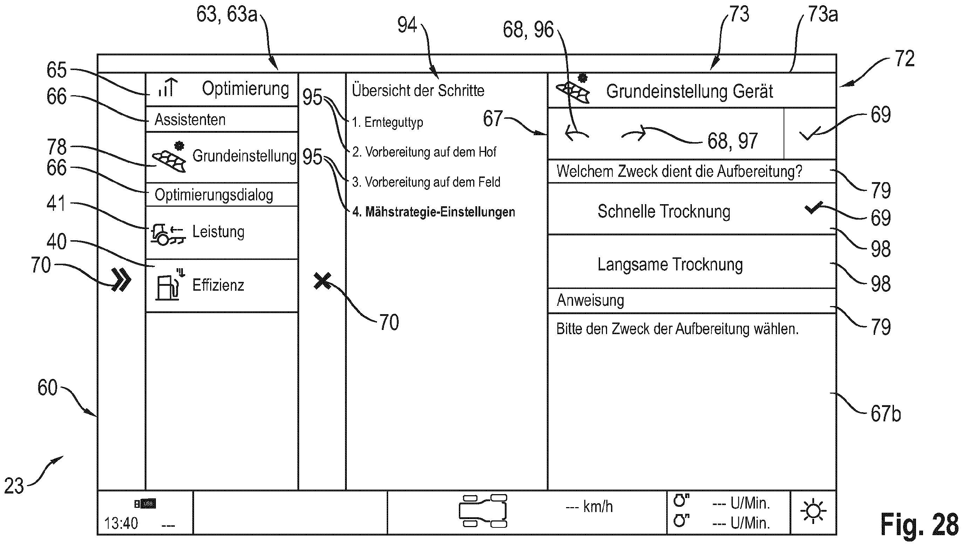

Fig. 28 zeigt den ausgewählten Einstellschritt 95 "Mähstrategie-Einstellungen" und damit verbundene Auswahl - bzw. Einstelloptionen, die in den Anzeigesegmenten 98 dargestellt und auswählbar sind. So wird beispielsweise im Dialogfeld 79 die Bedienperson 39 nach dem Zweck der Aufbereitung gefragt, sofern eine entsprechende Zusatzausstattung 7 an dem oder den Scheibenmähwerken 3, 4 vorhanden ist. Fehlt eine solche Zusatzausstattung 7, so entfällt auch der damit korrespondierende Dialog. In den nachfolgend angeordneten Anzeigesegmenten 98 sind die Auswahl - bzw. Einstelloptionen dargestellt, hier beispielhaft die Optionen "Schnelle Trocknung" oder "Langsame Trocknung". Die durch die Bedienperson 37 getroffene Auswahl ist optisch hervorgehoben und durch die Einstelloption 69 als ausgewählt und aktiv gekennzeichnet.

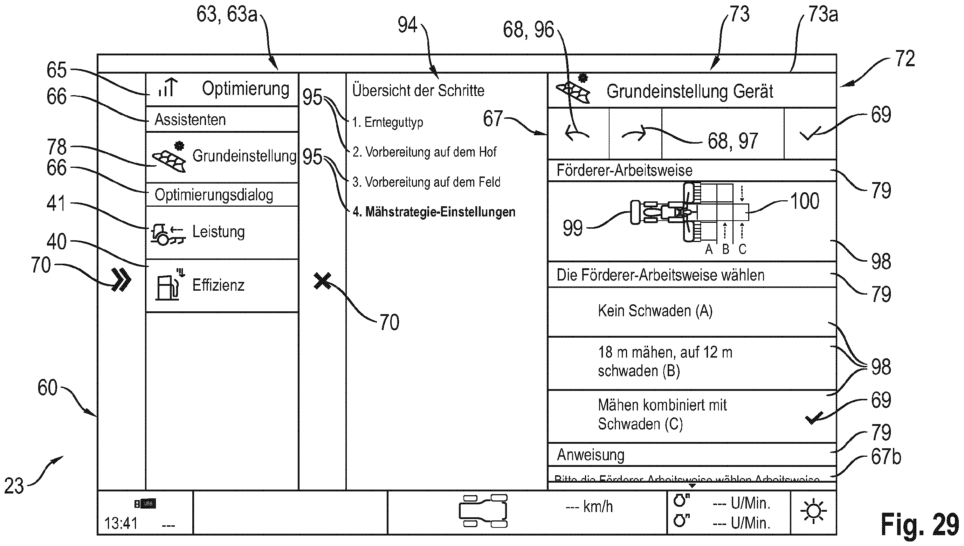

In Fig. 29 ist eine weitere Dialogabfrage für den ausgewählten Einstellschritt 95 "Mähstrategie-Einstellungen" dargestellt. Im Dialogfeld 79 wird die Bedienperson 39 nach der Arbeitsweise der Querfördervorrichtungen 9 an den Heckscheibenmähwerken 4 gefragt, sofern diese vorhanden sind. Auch hier werden in den Dialogfeldern 79 und den zugehörigen Anzeigesegmenten 98 die möglichen Arbeitsweisen der Querfördervorrichtungen 9 optisch anhand grafischer Darstellungen 99, 100 sowie mit diesen korrespondierend beschriebenen Arbeitsweisen erläutert.

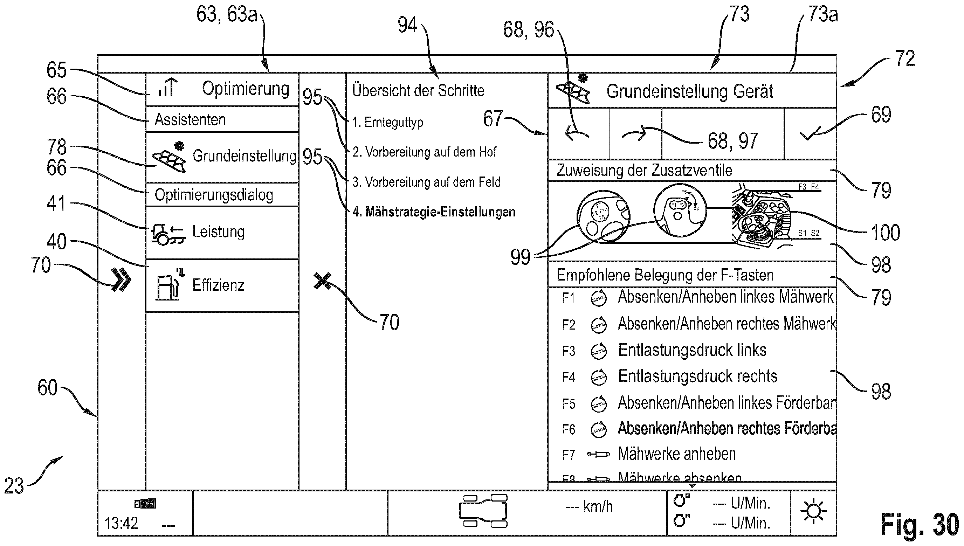

In Fig. 30 ist eine weitere Dialogabfrage für den ausgewählten Einstellschritt 95 "Mähstrategie-Einstellungen" dargestellt. Diese Dialogabfrage hat die Einstellung und Aktivierung einer Belegungszuordnung von Funktionen für manuell zu betätigende Bedienelemente, insbesondere Funktionstasten, einer als Multifunktionshebel ausgeführten Bedienvorrichtung der Arbeitsmaschine 2 für das zumindest eine Scheibenmähwerk 3, 4 zum Gegenstand. Es werden empfohlene Belegungen der Funktionstasten zur Auswahl gestellt, welche in einem Dialogfeld 79 und dem zugehörigen Anzeigesegment 98 dargestellt bzw. beschrieben werden. Die textliche Erläuterung der Zuordnung wird auch hier visuell durch grafische Darstellungen 99, 100 in einem weiteren Anzeigesegment 98 unterstützt.

Das Modul "Strategie" 38 gemäß Fig. 4 umfasst ebenfalls die natürlichsprachige, dialogbasierte Bestimmung von einzustellenden und/oder auszuwählenden Einstellparametern 49, die durch das Fahrerassistenzsystem 21 ermittelt werden. Die Anzeige- und Bedieneinheit 23 dient in identischer Weise der Visualisierung des natürlichsprachigen Dialoges für die Ermittlung und Einstellung des oder der einzustellenden und/oder auszuwählenden Einstellparameter 49. Auf der Grundlage der Grundeinstellung der spezifischen Maschinenanordnung 1, die durch das Ausführen der Einzelmodule 39a, 39b, 39c des Modules "Einstellung" 39 ermittelt wurde, werden im Modul "Strategie" 38 in Abhängigkeit von den auswählbaren Strategien 40, 41, 42, 43, 43a, 44 Einstellparameter 49 vorgeschlagen, die zu adaptieren sind. Hierzu wird bei der vorgegebenen Verwendung von Zusatzausstattung 7 in Form eines Zinkenaufbereiters oder eines Walzenaufbereiters sowie zusätzlichen an dem zumindest einen Scheibenmähwerk 3, 4 angeordneten einstellbaren Leitblechen, schwenkbaren Schwadscheiben und/oder angetriebenen Fördertrommeln, nach der Zielstellung des Einsatzes der Zusatzausstattung 7 durch das Fahrerassistenzsystem 21 gefragt. Dies gilt gleichermaßen auch für Scheibenmähwerke 3, 4 ohne Zusatzausstattung in Form eines Zinkenaufbereiters oder eines Walzenaufbereiters, wobei an den Scheibenmähwerken 3, 4 schwenkbare Schwadscheiben angeordnet sein können, welche der gleichmäßigen Verteilung des Mähgutes über die Arbeitsbreite des Scheibenmähwerkes 3, 4 dienen. Dies kann auch Bestandteil des Einzelmodules 39c "Arbeitsziel" sein.

Eine weitere Abfrage innerhalb des Moduls "Strategie" 38 kann mit einer auszuwählenden Zielarbeitsweise für die Schwadablage verknüpft sein. Auch dies kann Bestandteil des Einzelmodules 39c "Arbeitsziel" sein. Die möglichen Zielarbeitsweisen für die Schwadablage werden der Bedienperson 37 in Abhängigkeit von der Anzahl, Anordnung und Größe des oder der Scheibenmähwerke 3, 4 an der Arbeitsmaschine 2 durch die Anzeige- und Bedieneinheit 23 visualisiert und zur Auswahl zur Verfügung gestellt. Dabei kann auch das Vorhandensein von zumindest einer Querfördervorrichtung 9 berücksichtigt werden, welche die Anzahl an realisierbaren Zielarbeitsweisen der Schwadablage beeinflusst. Vorzugsweise kann die Bedienperson 37 bei der Auswahl der Zielarbeitsweise für die Schwadablage mittels zusätzlicher Hinweise auf Vor- und Nachteile der jeweiligen Zielarbeitsweise bei der Entscheidungsfindung unterstützt werden, welche von der Anzeige- und Bedieneinheit 23 im Kontext mit den verfügbaren Zielarbeitsweise für der Schwadablage angezeigt werden.

**Bezugszeichenliste**

| | | | |
|---|---|---|---|
| 1 | Maschinenanordnung | 32 | Regelwerk |
| 2 | Arbeitsmaschine | 33 | Regelwerk |
| 3 | Scheibenmähwerk | 34 | Arbeitsaggregat |
| 4 | Scheibenmähwerk | 35 | Sensorsystem |
| 5 | Schneidorgan | 36 | Steuersignal |
| 6 | Mähbalken | 37 | Bedienperson |
| 7 | Zusatzausstattung | 38 | Modul "Strategie" |
| 8 | Schwad | 39 | Modul "Einstellungen" |
| 9 | Querfördervorrichtung | 39a | Einzelmodul "Maschinendaten" |
| 10 | Hubwerk | 39b | Einzelmodul "Basiseinstellungen" |
| 11 | Hubwerk | 39c | Einzelmodul "Arbeitsziel" |
| 11a | Oberlenker | 40 | Strategie "Effizienz" |
| 11b | Unterlenker | 41 | Strategie "Leistung" |
| 12 | Vorderachse | 42 | Strategie "Qualität" |
| 13 | Hinterachse | 43 | Strategie "Bodenschonung" |
| 14 | Vorderräder | 43a | Strategie "Kosten" |
| 15 | Hinterräder | 44 | Strategie "Benutzerdefiniert" |
| 16 | Antriebsmotor | 45 | gerätespezifische Betriebsparameter |
| 17 | Getriebe | 46 | Herstellerspezifischer Basisdatensatz |
| 18 | Nebenabtriebswelle | 47 | Bedienerspezifische Basisdatensatz |
| 19 | Steuereinrichtung | 48 | gerätespezifische Maschinenparameter |
| 20 | Bedien- und Anzeigeeinheit | 49 | Einstellparameter |
| 21 | Fahrerassistenzsystem | 50 | Datenbank |
| 22 | Recheneinheit | 50a | Anbaugerätedatenbank |
| 23 | Bedien- und Anzeigeeinheit | 50b | Reifendatenbank |
| 24 | Interne Informationen | 51 | Verfahrensschritt |
| 25 | Externe Informationen | 52 | Verfahrensschritt |
| 26 | Hinterlegbare Informationen | 52a | Verfahrensschritt |
| 27 | Datenverarbeitungsvorrichtung | 53 | Verfahrensschritt |
| 28 | Steuereinrichtung | 54 | Verfahrensschritt |
| 29 | Arbeitsaggregat | 55a | Verfahrensschritt |
| 30 | Arbeitsmaschineneinstellautomat | 55 | Verfahrensschritt |
| 31 | Scheibenmähwerkeinstellautomat | 56 | Verfahrensschritt |
| 31a | Gemeinsamer Einstellautomat | 57 | Verfahrensschritt |
| 58 | Verfahrensschritt | 79 | Dialogfeld |
| 58a | Verfahrensschritt | 80 | Piktogramm/Icon |
| 58b | Verfahrensschritt | 81 | Teilbereich |
| 59 | Verfahrensschritt | 82 | Teilbereich |
| 60 | Erste Bedien- und Anzeigeebene | 83 | Teilbereich |
| 61 | Visualisierungsbereich | 84 | Anzeigefeld |
| 61a | Hauptmenüebene | 85 | Marker |
| 62a | Menüebene | 86 | Piktogramm/Icon |
| 63 | Visualisierungsbereich | 87 | Symbol |
| 63a | Submenüebene | 88 | Auswahloption |
| 64 | Hauptmenüpunkt | 89 | Einstelloption |
| 65 | Menüpunkt | 90 | Einstelloption |
| 66 | Submenüpunkt | 91 | Piktogramm/Icon |
| 67 | Menüband | 92 | Piktogramm/Icon |
| 67a | Darstellabschnitt | 93 | Zusatzfeld |
| 67b | Informationsfeld | 94 | Segment |
| 68 | Auswahloption | 95 | Einstellschritt |
| 69 | Einstelloption | 96 | Richtungspfeil |
| 70 | Bedienoption | 97 | Richtungspfeil |
| 71 | Auswahlindikator | 98 | Anzeigesegment |
| 72 | Zweite Bedien- und Anzeigeebene | 99 | Grafische Darstellung |
| 73 | Einstell- und Visualisierungsbereich | 100 | Grafische Darstellung |
| 73a | Kontextfeld | | |
| 74 | Löschoption | AM | Automatikmodus |
| 75 | Piktogramm/Icon | DM | Dialogmodus |
| 76 | Piktogramm/Icon | FR | Fahrtrichtung |
| 77 | Piktogramm/Icon | I_{An} | Ausgangssignal |
| 78 | Assistent | I_{En} | Eingangssignal |

## Patentansprüche

1. Landwirtschaftliche Maschinenanordnung (1), bestehend aus zumindest einer landwirtschaftlichen Arbeitsmaschine (2), welche zur Einstellung von Einstellparametern (49) der Arbeitsmaschine (2) ansteuerbare Arbeitsaggregate (34) aufweist, und zumindest einem an die Arbeitsmaschine (2) adaptierten Anbaugerät, welches eine Schnittstelle zur Adaption an die Arbeitsmaschine (2) aufweist, wobei die Maschinenanordnung (1) ein den Betrieb optimierendes Fahrerassistenzsystem (21) umfasst, welches über eine Recheneinheit (22) und zumindest eine Bedien- und Anzeigeeinheit (20, 23) verfügt, wobei die Recheneinheit (22) von maschineninternen Sensorsystemen (35) generierte Informationen(24), externe Informationen (25) und in der Recheneinheit (22) hinterlegbare Informationen (26) verarbeitet und wobei die Arbeitsmaschine (2) und/oder das zumindest eine Anbaugerät wenigstens eine Steuervorrichtung (19, 28) zur Steuerung und Regelung der Arbeitsmaschine (2) und/oder des Anbaugerätes umfassen, **dadurch gekennzeichnet, dass** das zumindest eine Anbaugerät als ein Scheibenmähwerk (3, 4) ausgeführt ist und das Fahrerassistenzsystem (21) so strukturiert ist, dass es einen Arbeitsmaschineneinstellautomaten (30) und einen Scheibenmähwerkeinstellautomaten (31) bildet, wobei die jeweiligen Einstellautomaten (30, 31) in Abhängigkeit voneinander eine Optimierung der Arbeitsweise der Arbeitsmaschine (2) und des zumindest einen Scheibenmähwerkes (3, 4) bewirken.

2. Landwirtschaftliche Maschinenanordnung (1) nach Anspruch 1, **dadurch gekennzeichnet, dass** der Arbeitsmaschineneinstellautomat (30) und der Scheibenmähwerkeinstellautomat (31) einen gemeinsamen Einstellautomaten (31a) bilden.

3. Landwirtschaftliche Maschinenanordnung (1) nach Anspruch 1 oder 2, **dadurch gekennzeichnet, dass** das Fahrerassistenzsystem (21) ein gemeinsames Regelwerk oder jeweils ein dem Arbeitsmaschineneinstellautomaten (30) und dem Scheibenmähwerkeinstellautomaten (31) zugeordnetes Regelwerk (32, 33) umfasst, welches bzw. welche eine Optimierung der Arbeitsweise der Maschinenanordnung (1) bewirken.

4. Landwirtschaftliche Maschinenanordnung (1) nach einem der Ansprüche 1 bis 3, **dadurch gekennzeichnet, dass** die Arbeitsmaschine (2) und/oder das zumindest eine an dieser adaptierte Scheibenmähwerk (3, 4) wenigstens eine als ISO-basierte Steuervorrichtung ausgeführte Steuervorrichtung (19, 28) umfassen, die einen Teil des Arbeitsmaschineneinstellautomaten (30) und des Scheibenmähwerkeinstellautomaten (31) ausbildet.

5. Landwirtschaftliche Maschinenanordnung (1) nach einem der Ansprüche 1 bis 4, **dadurch gekennzeichnet, dass** die Steuervorrichtung (28) des zumindest einen Scheibenmähwerkes (3, 4) als separates Terminal oder als Hydraulikventilanordnung der Arbeitsmaschine (2) ausgeführt ist, die einen Teil des Arbeitsmaschineneinstellautomaten (30) und/oder des Scheibenmähwerkeinstellautomaten (31) ausbildet.

6. Landwirtschaftliche Maschinenanordnung (1) nach einem der Ansprüche 1 bis 4, **dadurch gekennzeichnet, dass** das Fahrerassistenzsystem dazu eingerichtet ist, das zumindest eine Scheibenmähwerk (3, 4) mittels einer dem Scheibenmähwerk (3, 4) zugeordneten als Jobrechner, ausgeführten Steuereinrichtung (28) anzusteuern.

7. Landwirtschaftliche Maschinenanordnung (1) nach einem der vorangehenden Ansprüche, **dadurch gekennzeichnet, dass** das Fahrerassistenzsystem (21) zur Optimierung der Arbeitsweise der Maschinenanordnung (1) auswählbare Strategien (40, 41, 42, 43, 43a, 44) umfasst.

8. Landwirtschaftliche Maschinenanordnung (1) nach Anspruch 6, **dadurch gekennzeichnet, dass** die auswählbaren Strategien(40, 41, 42, 43, 43a, 44) zumindest eine der Strategien "Effizienz" (40), "Leistung" (41), "Qualität" (42), "Bodenschonung" (43), Kosten (43a) und/oder "Benutzerdefiniert" (44) umfassen.

9. Landwirtschaftliche Maschinenanordnung (1) nach einem der vorangehenden Ansprüche, **dadurch gekennzeichnet, dass** das Fahrerassistenzsystem (21) zu einer dialogbasierten Bestimmung von Einstellparametern (49) eingerichtet ist, die zur Optimierung der Arbeitsweise der Maschinenanordnung (1) heranzuziehen sind, wobei die Bestimmung zumindest eines Teils der Einstellparameter (49) durch das Fahrerassistenzsystem (21) vor Inbetriebnahme der Maschinenanordnung (1) und/oder Aufnahme eines landwirtschaftlichen Arbeitsvorganges, insbesondere Mähvorganges, durch die Maschinenanordnung (1) erfolgt.

10. Landwirtschaftliche Maschinenanordnung (1) nach einem der vorangehenden Ansprüche, **dadurch gekennzeichnet, dass** das Fahrerassistenzsystem (21) ein Modul "Einstellungen" (39) mit mehreren Einzelmodulen "Maschinendaten" (39a), "Basiseinstellungen" (39b) sowie "Arbeitsziel" (39c) umfasst, welche einer dialogbasierten Eingabe und/oder Vorgabe von Einstellparametern (49) der Arbeitsmaschine (2) und des zumindest einen Scheibenmähwerkes (3, 4) der Maschinenanordnung (1) dienen.

11. Landwirtschaftliche Maschinenanordnung (1) nach Anspruch 9, **dadurch gekennzeichnet, dass** zumindest ein vor der Inbetriebnahme der Maschinenanordnung (1) und/oder der Aufnahme eines landwirtschaftlichen Arbeitsvorganges, insbesondere Mähvorganges, durch die Maschinenanordnung (1) zu bestimmender Einstellparameter (49) für das zumindest eine Scheibenmähwerk (3, 4) aus der Gruppe Typ des zumindest einen Scheibenmähwerkes (3, 4), Position und Mittel zur Anordnung des zumindest einen Scheibenmähwerkes (3, 4) an der Arbeitsmaschine (2), Zusatzausstattung (7) an dem zumindest einen Scheibenmähwerk (3, 4) ist.

12. Landwirtschaftliche Maschinenanordnung (1) nach einem der vorangehenden Ansprüche, **dadurch gekennzeichnet, dass** zumindest ein vor der Aufnahme eines landwirtschaftlichen Arbeitsvorganges, insbesondere Mähvorganges, durch die Maschinenanordnung (1) zu bestimmender Einstellparameter (49) der Arbeitsmaschine (2) aus der Gruppe Ballastierung, Reifendruck, Reifengeometrie, Achslast, Entlastungskraft einer Entlastungsvorrichtung, Hubwerkeinstellparameter ist.

13. Landwirtschaftliche Maschinenanordnung (1) nach Anspruch 8 bis 11, **dadurch gekennzeichnet, dass** zumindest ein vor der Inbetriebnahme der Maschinenanordnung (1) und/oder der Aufnahme eines landwirtschaftlichen Arbeitsvorganges, insbesondere Mähvorganges, durch die Maschinenanordnung (1) zu bestimmender Einstellparameter (49) aus der Gruppe Antriebsdrehzahl zumindest einer Abtriebswelle der Arbeitsmaschine (2), Hubwerkeinstellparameter, Art einer Anbauvorrichtung für die mittelbare oder unmittelbare Adaption an die Arbeitsmaschine (2), Parameter der Anbauvorrichtung, Schnitthöhe, Entlastungskraft einer Entlastungsvorrichtung, Bodenabstand einer Bodenkonturanpassungsvorrichtung, Kopplungsabstand zur Arbeitsmaschine (2) ist.

14. Landwirtschaftliche Maschinenanordnung (1) nach einem der vorangehenden Ansprüche, **dadurch gekennzeichnet, dass** in der Recheneinheit (22) geräteherstellerspezifische Einstellparameter (45, 48) für wenigstens eine Kombination aus zumindest einem Scheibenmähwerk (3, 4) und einer Arbeitsmaschine (2) wiederabrufbar hinterlegt sind.

15. Landwirtschaftliche Maschinenanordnung (1) nach Anspruch 13, **dadurch gekennzeichnet, dass** das Fahrerassistenzsystem (21) dazu eingerichtet ist, in Abhängigkeit vom Typ und der Position der Anordnung eines frontseitig und zumindest eines heckseitig angeordneten Scheibenmähwerkes (3, 4) an der Arbeitsmaschine (2) und einer jeweiligen Arbeitsbreite der Scheibenmähwerke (3, 4) einzustellende Überlappungsbereiche der Arbeitsbreiten zu bestimmen.

16. Landwirtschaftliche Maschinenanordnung (1) nach einem der vorangehenden Ansprüche, **dadurch gekennzeichnet, dass** das Fahrerassistenzsystem (21) dazu eingerichtet ist, von dem Fahrerassistenzsystem (21) im Kontext mit einer spezifischen Maschinenanordnung (1) dialogbasierend erfasste, sensorisch bestimmte und/oder durch Übermittlung aus externen Datenquellen empfangene Einstellparameter (49) als einen gemeinsamen Datensatz oder separate Datensätze (47) zu speichern, und dass der Datensatz oder die Datensätze, die der jeweiligen spezifischen Maschinenanordnung (1) zugeordnet sind, wiederholt abrufbar und editierbar sind.

17. Landwirtschaftliche Maschinenanordnung (1) nach einem der vorangehenden Ansprüche, **dadurch gekennzeichnet, dass** zumindest ein der Maschinenanordnung (1) zugeordnetes Sensorsystem (35) dazu eingerichtet ist, einen oder mehrere Einstellparameter (49) der Maschinenanordnung (1), Erntegutparametern und/oder Umweltparametern autonom zu bestimmen.

18. Landwirtschaftliche Maschinenanordnung (1) nach einem der vorangehenden Ansprüche, **dadurch gekennzeichnet, dass** das Fahrerassistenzsystem (21) zum Empfang von externen Informationen (25) eingerichtet ist, um daraus die Einstellparameter (49), Erntegutparameter und/oder Umweltparameter zu bestimmen.

19. Landwirtschaftliche Maschinenanordnung (1) nach einem der vorangehenden Ansprüche, **dadurch gekennzeichnet, dass** in der Recheneinheit (21) ein funktionales Modell der Arbeitsmaschine (2) und des zumindest einen Scheibenmähwerkes (3, 4) hinterlegt ist, welches zumindest einen Teil der funktionalen Zusammenhänge der Arbeitsmaschine (2) und des daran adaptierten zumindest einen Scheibenmähwerkes (3, 4) abbildet.

20. Landwirtschaftliche Maschinenanordnung (1) nach Anspruch 18, **dadurch gekennzeichnet, dass** zur Abbildung der funktionalen Zusammenhänge der Maschinenanordnung (1) zumindest einem Einstellparameter (49) der Arbeitsmaschine (2) und/oder des zumindest einen Scheibenmähwerkes (3, 4) mindestens ein n-dimensionales Kennfeld zugeordnet ist, wobei der jeweilige Einstellparameter (49) als Ausgangsgröße (I_{A}) des mindestens einen n-dimensionalen Kennfeldes definiert ist.

21. Landwirtschaftliche Maschinenanordnung (1) nach Anspruch 19, **dadurch gekennzeichnet, dass** zumindest ein oder mehrere der Einstellparameter (49) der Arbeitsmaschine (2), des zumindest einen Scheibenmähwerkes (3, 4) und/oder aus den Umgebungsbedingungen resultierende Umweltparameter die Eingangsgrößen (I_{E}) des mindestens einen n-dimensionalen Kennfeldes bilden.

22. Landwirtschaftliche Maschinenanordnung (1) nach einem der vorangehenden Ansprüche, **dadurch gekennzeichnet, dass** das Fahrerassistenzsystem (21) dazu eingerichtet ist, mittels der zumindest einen Bedien- und Anzeigeeinheit (20, 23) einen Bedienablauf zur Einstellung eines zur Optimierung der Arbeitsweise der Maschinenanordnung (1) anzupassenden Einstellparameters (49) zu visualisieren.

23. Landwirtschaftliche Maschinenanordnung (1) nach einem der vorangehenden Ansprüche, **dadurch gekennzeichnet, dass** die zumindest eine Bedien- und Anzeigeeinheit (23) des Fahrerassistenzsystems (21) Teil eines mobilen Datenverarbeitungsgerätes (27) ist.
